# EUROPÄISCHE PATENTANMELDUNG

(11) **EP 3 718 680 A1**
(43) Veröffentlichungstag der Anmeldung: **07.10.2020**
(21) Anmeldenummer: 20168038.6
(22) Anmeldetag: 03.04.2020
(51) Int. Cl.: B23P 11/02, H05B 6/14, H05B 6/42

(54) **EIN- UND/ODER AUSSCHRUMPFSPANNSTATION FÜR WERKZEUGE UND VERFAHREN MIT EINER EIN- UND/ODER AUSSCHRUMPFSPANNSTATION FÜR WERKZEUGE**

(30) Priorität: 04.04.2019 DE 102019108904
(71) Anmelder: E. Zoller GmbH & Co. KG Einstell- und Messgeräte, 74385 Pleidelsheim (DE)
(72) Erfinder: Pfau, Christian, 74379 Ingersheim (DE); Zoller, Alexander, 74385 Pleidelsheim (DE)
(74) Vertreter: Daub, Thomas

(57) **Zusammenfassung**

Die Erfindung geht aus von einer Ein- und/oder Ausschrumpfspannstation (18a; 18b) für Werkzeuge (12a; 12b) zu einem zumindest zu einem Großteil automatisierten Ein- und/oder Ausschrumpfen von Werkzeugen (12a; 12b) in und/oder aus Werkzeugaufnahmen (14a; 14b), mit einer Induktionsheizeinheit (16a; 16b) und mit einer Kühleinheit (86a; 86b).

Es wird vorgeschlagen, dass die Kühleinheit (86a; 86b) automatisiert in einen wärmeleitenden Kontakt mit einer zuvor durch die Induktionsheizeinheit (16a; 16b) aufgeheizten Werkzeugaufnahme (14a; 14b) verbringbar ist.

## Beschreibung

### Stand der Technik

Die Erfindung betrifft eine Ein- und/oder Ausschrumpfspannstation nach dem Oberbegriff des Anspruchs 1 und ein Verfahren nach Anspruch 20.

Es ist bereits eine Ein- und/oder Ausschrumpfspannstation für Werkzeuge zu einem zumindest zu einem Großteil automatisierten Ein- und/oder Ausschrumpfen von Werkzeugen in und/oder aus Werkzeugaufnahmen, mit einer Induktionsheizeinheit und mit einer Kühleinheit vorgeschlagen worden.

Die Aufgabe der Erfindung besteht insbesondere darin, eine gattungsgemäße Vorrichtung mit vorteilhaften Eigenschaften hinsichtlich einer Kühlung von Werkzeugaufnahmen bei einem Einspannvorgang oder bei einem Ausspannvorgang von Werkzeugen in Werkzeugaufnahmen bereitzustellen. Die Aufgabe wird erfindungsgemäß durch die Merkmale der Patentansprüche 1 und 20 gelöst, während vorteilhafte Ausgestaltungen und Weiterbildungen der Erfindung den Unteransprüchen entnommen werden können.

### Vorteile der Erfindung

Die Erfindung geht aus von einer Ein- und/oder Ausschrumpfspannstation für Werkzeuge zu einem zumindest zu einem Großteil automatisierten Ein- und/oder Ausschrumpfen von Werkzeugen in und/oder aus Werkzeugaufnahmen, mit einer Induktionsheizeinheit und mit einer Kühleinheit.

Es wird vorgeschlagen, dass die Kühleinheit automatisiert in einen wärmeleitenden Kontakt mit einer zuvor durch die Induktionsheizeinheit aufgeheizten Werkzeugaufnahme verbringbar ist. Dadurch können vorteilhafte Kühleigenschaften erreicht werden. Insbesondere kann vorteilhaft ein im Anschluss an ein Aufheizen der Werkzeugaufnahme stattfindender Kühlprozess des Einschrumpfvorgangs oder des Ausschrumpfvorgangs von Werkzeugen optimiert werden. Insbesondere kann der Einschrumpfvorgang oder der Ausschrumpfvorgang beschleunigt werden, insbesondere indem eine Zeit zwischen Erwärmen und Abkühlen besonders kurzgehalten werden kann. Zudem kann vorteilhaft ein hoher Automatisierungsgrad erreicht werden. Vorteilhaft kann eine hohe Arbeitssicherheit erreicht werden, insbesondere durch eine automatisierte Handhabung von heißen Werkzeugaufnahmen.

Unter einer "Ein- und/oder Ausschrumpfspannstation für Werkzeuge" soll insbesondere eine Vorrichtung verstanden werden, welche dazu vorgesehen ist, einen Einschrumpfvorgang und/oder einen Ausschrumpfvorgang von Werkzeugen in Werkzeugaufnahmen, vorzugsweise zumindest zu einem Großteil automatisiert, bevorzugt vollständig automatisiert, vorzunehmen. Unter "zu einem Großteil automatisiert" soll insbesondere verstanden werden, dass mit Ausnahme der Eingabe des Werkzeugs und/oder der Werkzeugaufnahme in die Ein- und/oder Ausschrumpfspannstation und/oder mit Ausnahme der Entnahme des Werkzeugs und/oder der Werkzeugaufnahme aus der Ein- und/oder Ausschrumpfspannstation alle Arbeitsschritte der Ein- und/oder Ausschrumpfspannstation unabhängig von einem Bediener ablaufen. Zudem ist vorstellbar, dass auch die Eingabe und/oder die Entnahme des Werkzeugs und/oder der Werkzeugaufnahme automatisiert ist, beispielsweise mit Hilfe eines Industrieroboters. Insbesondere ist auch der Kühlprozess des Einschrumpfvorgangs und/oder des Ausschrumpfvorgangs unabhängig von einem Eingriff eines Bedieners durchführbar. Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem eine Werkzeugaufnahmeöffnung der Werkzeugaufnahme zunächst thermisch aufgeweitet wird, dann ein Werkzeug in die Werkzeugaufnahmeöffnung eingeführt wird und wobei das Werkzeug schließlich nach einem Abkühlen der Werkzeugaufnahme durch einen Kraftschluss, insbesondere einen Reibschluss, in der Werkzeugaufnahme befestigt ist. Unter einem "Ausschrumpfen von Werkzeugen in und/oder aus Werkzeugaufnahmen" soll insbesondere ein Lösen von mittels einem Kraftschluss, insbesondere einem Reibschluss, in Werkzeugaufnahmen befestigten Werkzeugen verstanden werden, bei dem die Werkzeugaufnahmeöffnung der Werkzeugaufnahme, insbesondere unter Vermeidung einer gleichzeitigen Erwärmung des Werkzeugs durch die Abschirmeinheit, thermisch soweit aufgeweitet wird, bis das in der Werkzeugaufnahme befestigte Werkzeug aus der Werkzeugaufnahme entnehmbar ist.

Die Induktionsheizeinheit ist dazu vorgesehen, zumindest einen Teil der Werkzeugaufnahme bei einem Ein- und/oder Ausschrumpfvorgang durch Erhitzen aufzuweiten. Die Induktionsheizeinheit umfasst zumindest eine Induktionsspule, welche zumindest dazu vorgesehen ist, ein Induktionsmagnetfeld zu erzeugen. Das Induktionsmagnetfeld ist dazu vorgesehen, mit dem Material der Werkzeugaufnahme wechselzuwirken und es dadurch zu erhitzen. Die Kühleinheit ist dazu vorgesehen, eine, insbesondere zuvor durch die Induktionsheizeinheit erhitzte, Werkzeugaufnahme zu kühlen. Die Kühleinheit ist dazu vorgesehen, Wärme von einer, insbesondere zuvor durch die Induktionsheizeinheit erhitzten, Werkzeugaufnahme abzuführen. Die Kühleinheit umfasst insbesondere zumindest einen Kühlkörper, welcher dazu vorgesehen ist, die Wärme von der Werkzeugaufnahme aufzunehmen. Die Kühleinheit umfasst insbesondere zumindest einen Kühlmittelkreislauf, welcher dazu vorgesehen ist, die durch den Kühlkörper der Kühleinheit aufgenommene Wärme von dem Kühlkörper weg zu transportieren. Die Kühleinheit umfasst zudem insbesondere eine Düse, insbesondere eine Kühldüse, welche dazu vorgesehen ist, ein Kühlgas, insbesondere Kühlluft, auf eine Werkzeugaufnahme zu blasen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "wärmeleitenden Kontakt" soll insbesondere ein berührender Kontakt der Kühleinheit, insbesondere des Kühlkörpers, mit der Werkzeugaufnahme verstanden werden, welcher dazu vorgesehen ist, einen Wärmestrom von der Werkzeugaufnahme zu dem Kühlkörper zu erlauben. Insbesondere berühren sich in dem wärmeleitenden Kontakt ein Bereich der Kühleinheit mit einer Wärmeleitfähigkeit größer als 10 W/(m*K), vorzugsweise größer als 40 W/(m*K) und bevorzugt größer als 100 W/(m*K), und ein Bereich der Werkzeugaufnahme mit einer Wärmeleitfähigkeit größer als 10 W/(m*K), vorzugsweise größer als 20 W/(m*K) und bevorzugt größer als 40 W/(m*K). Insbesondere kontaktiert die Kühleinheit die Werkzeugaufnahme in dem wärmeleitenden Kontakt in Umfangsrichtung der Werkzeugaufnahme. Insbesondere wird die Kühleinheit, vorzugsweise der Kühlkörper, zumindest mittels eines automatisiert geführten und angetriebenen Aufsetzmechanismus in wärmeleitenden Kontakt mit der Werkzeugaufnahme verbracht.

Ferner wird vorgeschlagen, dass die Ein- und/oder Ausschrumpfspannstation eine, insbesondere einzelne, Linearführung aufweist, entlang welcher zumindest die Kühleinheit und die Induktionsheizeinheit automatisiert verfahrbar sind, insbesondere in deren Axialrichtungen. Dadurch können vorteilhafte Kühleigenschaften erreicht werden. Insbesondere kann vorteilhaft ein im Anschluss an ein Aufheizen der Werkzeugaufnahme stattfindender Kühlprozess des Einschrumpfvorgangs oder des Ausschrumpfvorgangs von Werkzeugen optimiert, insbesondere automatisiert, verkürzt und/oder sicher gemacht, werden. Die Linearführung ist insbesondere als eine Vertikalführung ausgebildet. Insbesondere ist die Linearführung zu einer Durchführung einer automatisierten geführten Bewegung der Kühleinheit entlang einer Vertikalachse der Ein- und/oder Ausschrumpfspannstation vorgesehen. Insbesondere verläuft die Vertikalachse in der Aufstellposition der Ein- und/oder Ausschrumpfspannstation senkrecht zu einer Aufstellfläche auf, welche die Ein- und/oder Ausschrumpfspannstation aufgestellt ist. Insbesondere verläuft die Axialrichtung der Kühleinheit parallel zu der Vertikalachse. Insbesondere verläuft die Axialrichtung der Induktionsheizeinheit parallel zu der Vertikalachse. Insbesondere überlagern sich die Axialrichtungen der Kühleinheit und der Induktionsheizeinheit. Insbesondere überlagern sich die Axialrichtungen der Kühleinheit und der Vertikalachse der Ein-und/oder Ausschrumpfspannstation. Insbesondere überlagern sich die Axialrichtungen der Induktionsheizeinheit und der Vertikalachse der Ein- und/oder Ausschrumpfspannstation. Insbesondere sind die Kühleinheit und die Induktionsheizeinheit durch eine identische Führungseinheit geführt und vorzugsweise ist die Bewegung der Kühleinheit und die Induktionsheizeinheit durch eine identische Antriebswelle angetrieben.

Des Weiteren wird vorgeschlagen, dass die Kühleinheit und die Induktionsheizeinheit in einem montierten Zustand, insbesondere der Ein-und/oder Ausschrumpfspannstation, fest miteinander gekoppelt sind. Dadurch können vorteilhafte Kühleigenschaften erreicht werden. Insbesondere kann vorteilhaft ein im Anschluss an ein Aufheizen der Werkzeugaufnahme stattfindender Kühlprozess des Einschrumpfvorgangs oder des Ausschrumpfvorgangs von Werkzeugen optimiert, insbesondere automatisiert und/oder verkürzt werden. Zudem kann vorteilhaft auf eine separate Führung von Induktionsheizeinheit und Kühleinheit verzichtet werden, wodurch vorteilhaft Kosten reduziert werden können. Insbesondere sind die Kühleinheit und die Induktionsheizeinheit in einem betriebsbereiten Zustand der Ein- und/oder Ausschrumpfspannstation fest miteinander gekoppelt. Unter einer "festen Kopplung" der Kühleinheit und der Induktionsheizeinheit miteinander soll insbesondere verstanden werden, dass die Kühleinheit und die Induktionsheizeinheit derart miteinander verbunden sind, dass zumindest ein Bauteil einer der Einheiten mit einem Bauteil der anderen Einheit fest verbunden ist und/oder dass jeweils ein Bauteil der Kühleinheit und der Induktionsheizeinheit mit einem gemeinsamen, insbesondere entlang der Linearachse bewegbaren, weiteren Bauteil fest verbunden ist. Insbesondere sind fest miteinander gekoppelte Einheiten, insbesondere die Kühleinheit und die Induktionsheizeinheit, in dem montierten Zustand und/oder in dem betriebsbereiten Zustand ausschließlich gemeinsam entlang einer gemeinsamen Bewegungsachse bewegbar.

Außerdem wird vorgeschlagen, dass die Kühleinheit in einer Axialrichtung der Induktionsheizeinheit, insbesondere in der Vertikalrichtung, direkt unterhalb oder direkt oberhalb der Induktionsheizeinheit angeordnet ist. Dadurch können vorteilhafte Kühleigenschaften erreicht werden. Insbesondere kann vorteilhaft ein im Anschluss an ein Aufheizen der Werkzeugaufnahme stattfindender Kühlprozess des Einschrumpfvorgangs oder des Ausschrumpfvorgangs von Werkzeugen optimiert werden. Insbesondere kann dadurch vorteilhaft ein Aufsetzen der Kühleinheit auf die Werkzeugaufnahme mittels eines einfachen Verfahrens der Induktionsheizeinheit in die Axialrichtung ermöglicht werden. Insbesondere ist die Induktionsheizeinheit frei von einer internen Kühlvorrichtung und/oder von internen Kühlkanälen. Insbesondere sind die Induktionsheizeinheit und die Kühleinheit getrennt auf die Werkzeugaufnahme aufsetzbar ausgebildet.

Wenn die Kühleinheit zumindest eine Luftkühlung umfasst, können vorteilhafte Kühleigenschaften erreicht werden. Insbesondere kann vorteilhaft ein einfaches Zu- und/oder Abführen des Kühlmediums, insbesondere der Kühlluft, ermöglicht werden. Insbesondere umfasst die Luftkühlung zumindest eine Düse, die dazu vorgesehen ist, Kühlluft in Richtung einer in der Ein- und/oder Ausschrumpfspannstation eingespannten Werkzeugaufnahme zu blasen. Insbesondere wird die Düse, vorzugsweise die Kühleinheit, während einer Abgabe der Kühlluft oszillierend entlang der Axialrichtung der Kühleinheit bewegt, wobei vorzugsweise eine Vertikalerstreckung des Bewegungsbereichs der oszillierenden Bewegung einer Vertikalerstreckung eines zuvor aufgeheizten Bereichs der Werkzeugaufnahme, insbesondere eines Spannbereichs der Werkzeugaufnahme, entspricht. Dadurch kann vorteilhaft eine besonders effektive Kühlung erreicht werden, insbesondere indem die Kühlluft gleichmäßig den gesamten zuvor erhitzten Bereich anströmt. Insbesondere wird die Düse, vorzugsweise die Kühleinheit, und/oder die Werkzeugaufnahme während einer Abgabe der Kühlluft um die Axialrichtung der Kühleinheit und/oder der Werkzeugaufnahme rotiert. Dadurch kann vorteilhaft eine besonders effektive Kühlung erreicht werden, insbesondere indem die Kühlluft gleichmäßig den gesamten zuvor erhitzten Bereich anströmt. Insbesondere umfasst die Kühleinheit eine Mehrzahl an Düsen, welche verteilt angeordnet sind. Insbesondere sind die Düsen ringförmig um ein gemeinsames Zentrum der Kühleinheit und der Induktionsspule angeordnet.

Zusätzlich wird vorgeschlagen, dass die Luftkühlung einen, insbesondere rund um die Werkzeugaufnahme anordenbaren, Kühlring umfasst. Dadurch können vorteilhafte Kühleigenschaften erreicht werden. Insbesondere kann vorteilhaft eine besonders gute Verteilung des Kühlmediums über einen zu kühlenden Bereich der Werkzeugaufnahme erreicht werden. Insbesondere umfasst der Kühlring die Mehrzahl an Düsen. Insbesondere sind die Düsen in Richtung eines Zentrums des Kühlrings angeordnet. Insbesondere ist der Kühlring automatisiert über eine in einer Haltevorrichtung der Ein- und/oder Ausschrumpfspannstation befestigte Werkzeugaufnahme stülpbar. Insbesondere weist der Kühlring einen Durchmesser auf, welcher zumindest einem Innendurchmesser von Spulenwicklungen der Induktionsspule der Induktionsheizeinheit und/oder welcher zumindest einem Innendurchmesser einer zentralen Öffnung der Induktionsheizeinheit entspricht. Insbesondere ist die Induktionsheizeinheit und der Kühlring um eine gemeinsame Achse zentriert, welche sich entlang eines Zentrums der Öffnung der Induktionsheizeinheit erstreckt.

Weiterhin wird vorgeschlagen, dass die Kühleinheit zumindest ein von einer Kühlflüssigkeit durchströmbares Kühlelement umfasst. Dadurch können vorteilhafte Kühleigenschaften erreicht werden. Insbesondere kann dadurch ein besonders vorteilhafter und/oder besonders effektiver Abtransport von Wärme ermöglicht werden. Vorzugsweise umfasst die Kühleinheit zumindest das von der Kühlflüssigkeit durchströmbare Kühlelement und die Luftkühlung, insbesondere den Kühlring. Insbesondere ist die Kühlflüssigkeit als Wasser ausgebildet. Alternativ kann die Kühlflüssigkeit jedoch auch verschieden von Wasser beispielsweise als ein Öl oder als ein Alkohol, ausgebildet sein und/oder Zusätze wie Frostschutzmittel und/oder Korrosionsschutzmittel umfassen.

Zudem wird vorgeschlagen, dass die Kühleinheit zumindest ein weiteres von einer Kühlflüssigkeit durchströmbares Kühlelement umfasst, welches getrennt von dem Kühlelement ausgebildet ist. Dadurch kann vorteilhaft eine besonders hohe Flexibilität der Kühleinheit erreicht werden. Insbesondere kann dadurch vorteilhaft eine besonders effektive Kühlung erreicht werden. Insbesondere ist das weitere Kühlelement gespiegelt zu dem Kühlelement ausgebildet. Zudem ist vorstellbar, dass die Kühleinheit mehr als zwei separate Kühlelemente aufweist. Insbesondere sind Kühlmittelleitungen der von der Kühlflüssigkeit durchströmbaren Kühlelemente in Reihe geschaltet. Dadurch kann vorteilhaft ein besonders einfacher gemeinsamer Kühlmittelkreislauf erhalten werden. Vorzugsweise sind die Kühlmittelleitungen der von der Kühlflüssigkeit durchströmbaren Kühlelemente parallelgeschaltet. Dadurch kann vorteilhaft eine besonders gleichmäßige Kühlleistung der Kühlelemente erreicht werden.

Außerdem wird vorgeschlagen, dass die Ein- und/oder Ausschrumpfspannstation eine Lagereinheit aufweist, welche dazu vorgesehen ist, das Kühlelement und das weitere Kühlelement relativ zueinander beweglich zu lagern. Dadurch kann vorteilhaft eine hohe Flexibilität der Kühleinheit erreicht werden. Insbesondre kann vorteilhaft eine Anpassung an verschieden geformte Werkzeugaufnahmen erreicht werden, wodurch insbesondere eine besonders effiziente und/oder effektive Kühlung der Werkzeugaufnahme erreicht werden kann. Zudem kann vorteilhaft durch ein Auseinanderbewegen der Kühlelemente ein Raum geschaffen werden, welcher ein Aufsetzen einer oberhalb der Kühleinheit angeordneten und fest mit der Kühleinheit gekoppelten Induktionsheizeinheit auf eine Werkzeugaufnahme ermöglicht. Insbesondere ist die Lagereinheit zumindest dazu vorgesehen, ein lineares Auseinanderbewegen und/oder ein lineares Aufeinanderzubewegen der Kühlelemente zu ermöglichen. Alternativ oder zusätzlich kann die Lagereinheit dazu vorgesehen sein, die Kühlelemente zu verschwenken oder zu rotieren. Die Ein- und/oder Ausschrumpfspannstation umfasst eine Steuer- und/oder Regeleinheit. Eine Bewegung der Kühlelemente mittels der Lagereinheit ist, insbesondere mittels der Steuer- und/oder Regeleinheit, automatisiert steuer-und/oder regelbar. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Wenn das Kühlelement und das weitere Kühlelement mittels der Lagereinheit zumindest in einer Ebene senkrecht zu einer vorgesehenen Axialrichtung einer in der Ein- und/oder Ausschrumpfspannstation positionierten Werkzeugaufnahme bewegbar sind, können vorteilhafte Kühleigenschaften erreicht werden. Insbesondere kann ein besonders einfaches Zuschalten und/oder Abschalten der Kühleinheit ermöglicht werden. Insbesondere kann dadurch ein besonders schnelles Zuschalten der Kühleinheit im Anschluss an ein Aufheizen einer Werkzeugaufnahme ermöglicht werden. Dadurch kann insbesondere eine Arbeitsfrequenz und/oder ein Durchsatz der Ein- und/oder Ausschrumpfspannstation erhöht werden. Die vorgesehene Axialrichtung der Ein-und/oder Ausschrumpfstation überlagert sich insbesondere mit der Vertikalachse der Ein- und/oder Ausschrumpfspannstation. Insbesondere ist die in der Ein-und/oder Ausschrumpfspannstation positionierte Werkzeugaufnahme in der Haltevorrichtung der Ein- und/oder Ausschrumpfspannstation, insbesondere in einem Vorsatzhalter der Haltevorrichtung, positioniert.

Ferner wird vorgeschlagen, dass die Kühlelemente in einem Kühlbetriebszustand, in welchem sich die Kühlelemente in einem wärmeleitenden Kontakt mit einer Werkzeugaufnahme befinden, dazu vorgesehen sind, die Werkzeugaufnahme zumindest zu einem Großteil zu umgreifen. Dadurch können vorteilhafte Kühleigenschaften erreicht werden. Insbesondere kann eine besonders effektive und/oder besonders gleichmäßige Kühlung des zuvor aufgeheizten Bereichs der Werkzeugaufnahme, insbesondere des Spannbereichs der Werkzeugaufnahme, erreicht werden. Unter einem "Spannbereich der Werkzeugaufnahme" soll insbesondere zumindest ein Bereich der Werkzeugaufnahme verstanden werden, welcher eine zur Aufnahme eines Werkzeugs vorgesehene Werkzeugaufnahmeöffnung der Werkzeugaufnahme, insbesondere in einer Radialrichtung der Werkzeugaufnahmeöffnung, umgibt. In dem Kühlbetriebszustand werden insbesondere die Kühlelemente aktiv von dem Kühlmedium durchströmt. Darunter, dass die Kühlelemente die Werkzeugaufnahme "zu einem Großteil umgreifen" soll insbesondere verstanden werden, dass die Kühlelemente zusammen gesehen, zumindest 60 %, vorzugsweise zumindest 80 %, bevorzugt zumindest 90% und besonders bevorzugt zumindest 95 % eines Umfangs der Werkzeugaufnahme, insbesondere des Spannbereichs, in dem Kühlbetriebszustand abdecken. Besonders vorteilhaft decken die Kühlelemente den ganzen Umfang der Werkzeugaufnahme, insbesondere des Spannbereichs, in dem Kühlbetriebszustand ab.

Wenn sich die Kühlelemente in einem Kühlbetriebszustand, in welchem sich die Kühlelemente in einem wärmeleitenden Kontakt mit einer Werkzeugaufnahme befinden, gegenseitig berühren, können vorteilhafte Kühleigenschaften erreicht werden. Insbesondere kann eine besonders effektive und/oder effiziente Kühlung der Werkzeugaufnahme erreicht werden. Insbesondere berühren sich jeweils wärmeleitende Bauteile der Kühlelemente in dem Kühlbetriebszustand gegenseitig. Dadurch kann vorteilhaft eine gute Verteilung der von der Werkzeugaufnahme abgeführten Wärme erreicht werden, wodurch insbesondere eine Effektivität der Wärmeabfuhr verbessert werden kann. Insbesondere umschließen die Kühlelemente die Werkzeugaufnahme in Umfangsrichtung der Werkzeugaufnahme vollständig. Insbesondere sind die Kühlelemente in einem Induktionsheizbetriebszustand, in welchem die Werkzeugaufnahme, vorzugsweise der Spannbereich der Werkzeugaufnahme, durch die Induktionsheizeinheit erhitzt wird frei von einem gegenseitigen Kontakt.

Ferner wird vorgeschlagen, dass die Lagereinheit dazu vorgesehen ist, die Kühlelemente außerhalb eines Kühlbetriebszustands in Positionen zu verbringen, welche ein behinderungsfreies Aufsetzen der Induktionsheizvorrichtung auf die Werkzeugaufnahme erlaubt. Dadurch kann vorteilhaft ein besonders effizienter Einschrumpfvorgang oder Ausschrumpfvorgang erreicht werden. Zudem kann vorteilhaft ein hoher Grad an Automatisierung erreicht werden. Insbesondere bewegt die Lagereinheit die Kühlelemente außerhalb des Kühlbetriebszustands, insbesondere vordem Induktionsheizzustand, auseinander. Insbesondere haben die Kühlelemente außerhalb des Kühlbetriebszustands, insbesondere vor dem Induktionsheizzustand, einen maximal möglichen Abstand zueinander. Insbesondere ist ein Abstand der Kühlelemente in einer Ebene senkrecht zu der Axialrichtung, insbesondere senkrecht zu der Vertikalachse der Ein- und/oder Ausschrumpfspannstation, außerhalb des Kühlbetriebszustands, insbesondere vor dem Induktionsheizzustand, größer als eine maximale Erstreckung der Haltevorrichtung, insbesondere des Vorsatzhalters der Haltevorrichtung, und/oder der Werkzeugaufnahme in der Ebene senkrecht zu der Axialrichtung, insbesondere senkrecht zu der Vertikalachse der Ein- und/oder Ausschrumpfspannstation.

Außerdem wird vorgeschlagen, dass das Kühlelement, insbesondere beide Kühlelemente, eine insbesondere halbschalige, vorzugsweise halbrunde, Öffnung aufweist, welche dazu vorgesehen ist, etwa eine Hälfte eines Umfangs einer Werkzeugaufnahme zu umgreifen. Dadurch können vorteilhafte Kühleigenschaften erreicht werden. Insbesondere kann eine besonders effektive und/oder besonders gleichmäßige Kühlung des zuvor aufgeheizten Bereichs der Werkzeugaufnahme, insbesondere des Spannbereichs der Werkzeugaufnahme, erreicht werden. Die Öffnung ist als eine seitlich an dem Kühlelement angeordnete Ausnehmung ausgebildet. Die Öffnung ist zumindest zu drei Raumrichtungen hin nicht durch das Kühlelement begrenzt. Die Öffnung ist insbesondere als eine halbrunde Öffnung ausgebildet. Alternativ kann die halbschalige Öffnung jedoch auch eine polygonale, eine ovale oder eine anderweitig geformte Öffnung ausbilden. Vorzugsweise ist eine Form der halbschaligen Öffnung an mögliche Außenformen der durch die Kühlelemente zu kühlenden Werkzeugaufnahmen angepasst.

Des Weiteren wird vorgeschlagen, dass zumindest ein Teil der Oberfläche der Öffnung, insbesondere ein zur Herstellung des wärmeleitenden Kontakts vorgesehener Bereich der Öffnung, von einem flexiblen Gewebe, insbesondere einem Metallgewebe, beispielsweise einem Kupfergewebe, einem Stahlgewebe oder einem Aluminiumgewebe, ausgebildet ist. Dadurch können vorteilhafte Kühleigenschaften erreicht werden. Insbesondere kann dadurch ein besonders gut wärmeleitender Kontakt zwischen der Kühleinheit und der Werkzeugaufnahme geschaffen werden. Vorteilhaft kann ein Anpassen einer Oberflächenform des zur Herstellung des wärmeleitenden Kontakts vorgesehenen Bereichs der Öffnung an Außenformen verschiedener Werkzeugaufnahmen ermöglicht werden. Dadurch kann vorteilhaft ein hoher Wärmeübertrag, d.h. eine schnelle Ableitung von Wärme, bei verschiedenen in die Ein- und/oder Ausschrumpfspannstation eingesetzten Werkzeugaufnahmen erreicht werden. Insbesondere ist das flexible Gewebe aus einem Material mit einer hohen Wärmeleitfähigkeit, insbesondere einer Wärmeleitfähigkeit größer als 10 W/(m*K), vorzugsweise größer als 40 W/(m*K) und bevorzugt größer als 100 W/(m*K), ausgebildet. Insbesondere ist das flexible Gewebe in dem Kühlbetriebszustand auf einer, einer zu kühlenden Werkzeugaufnahme abgewandten Seite direkt oder indirekt von dem Kühlmedium umspült.

In einem weiteren Aspekt der Erfindung wird vorgeschlagen, dass das Kühlelement, insbesondere beide Kühlelemente, zumindest eine weitere insbesondere halbschalige, vorzugsweise halbrunde, Öffnung aufweist, welche ebenfalls dazu vorgesehen ist, etwa eine Hälfte eines Umfangs einer Werkzeugaufnahme zu umgreifen, wobei ein Durchmesser der weiteren insbesondere halbschaligen, vorzugsweise halbrunden, Öffnung verschieden ist von einem Durchmesser der insbesondere halbschaligen, vorzugsweise halbrunden, Öffnung. Dadurch können vorteilhafte Kühleigenschaften erreicht werden. Insbesondere kann dadurch ein besonders gut wärmeleitender Kontakt zwischen der Kühleinheit und der Werkzeugaufnahme geschaffen werden. Vorteilhaft kann eine besonders hohe Kompatibilität der Kühlelemente mit verschiedenen Formen und/oder Durchmessern von zu kühlenden Werkzeugaufnahmen erreicht werden. Insbesondere weist das Kühlelement und/oder das weitere Kühlelement eine Mehrzahl an weiteren, insbesondere halbschaligen, Öffnungen, insbesondere zwei, vorzugsweise drei, vorteilhaft vier, besonders vorteilhaft fünf, bevorzugt sechs und besonders bevorzugt mehr als sechs weiteren, insbesondere halbschaligen, Öffnungen auf, welche jeweils verschiedene Durchmesser aufweisen. Insbesondere entspricht die Anzahl der, insbesondere halbschaligen, Öffnungen des Kühlelements der Anzahl der, insbesondere halbschaligen, Öffnungen des weiteren Kühlelements. Insbesondere entsprechen die Durchmesser der, insbesondere halbschaligen, Öffnungen des Kühlelements den Durchmessern der, insbesondere halbschaligen, Öffnungen des weiteren Kühlelements. Insbesondere ist ein Durchmesser einer insbesondere halbschaligen, vorzugsweise halbrunden, Öffnung als ein linearer, in einem montierten Zustand der Ein- und/oder Ausschrumpfspannstation senkrecht zu der Vertikalachse der Ein- und/oder Ausschrumpfspannstation, verlaufender Abstand zweier gegenüberliegender Seitenwände der insbesondere halbschaligen, vorzugsweise halbrunden, Öffnung und/oder als ein linearer, in dem montierten Zustand der Ein- und/oder Ausschrumpfspannstation senkrecht zu der Vertikalachse der Ein- und/oder Ausschrumpfspannstation verlaufender, Abstand einer Seitenwand der insbesondere halbschaligen, vorzugsweise halbrunden, Öffnung und einer, vorzugsweise zirkularen, gedachten Fortsetzung der Form der insbesondere halbschaligen, vorzugsweise halbrunden, Öffnung ausgebildet.

Wenn das Kühlelement und/oder das weitere Kühlelement, insbesondere um eine durch das Kühlelement verlaufende Rotationsachse, rotierbar ist, kann vorteilhaft eine automatisierte Anpassung einer Kontaktfläche des Kühlelements, welche dazu vorgesehen ist, die Werkzeugaufnahme zu einer Wärmeabführung zu kontaktieren, ermöglicht werden. Insbesondere kann vorteilhaft eine, insbesondere halbschalige, Öffnung des Kühlelements aus der Mehrzahl an, insbesondere halbschaligen, Öffnungen des Kühlelements ausgewählt werden, dessen Durchmesser und/oder Form am Besten zu einer jeweiligen zu kühlenden Werkzeugaufnahme passt. Insbesondere verläuft die Rotationsache des Kühlelementes zumindest im Wesentlichen zentral durch das Kühlelement. Insbesondere verläuft eine weitere Rotationsache des weiteren Kühlelementes zumindest im Wesentlichen zentral durch das weitere Kühlelement. Insbesondere verläuft die Rotationsachse des Kühlelements und/oder die weitere Rotationsachse des weiteren Kühlelements zumindest im Wesentlichen parallel zu der Axialrichtung der Ein- und/oder Ausschrumpfspannstation und/oder zu einer vorgesehenen Rotationsachse der zu kühlenden Werkzeugaufnahme. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Zusätzlich wird vorgeschlagen, dass mittels der Rotationsbewegung des Kühlelements um die Rotationsachse und/oder mittels der Rotationsbewegung des weiteren Kühlelements um die weitere Rotationsachse ein, insbesondere in seinem Durchmesser, passender Kontaktbereich des Kühlelements, welcher zu einem wärmeleitenden Kontakt des Kühlelements mit einer Werkzeugaufnahme vorgesehen ist, auswählbar ist. Dadurch können vorteilhafte Kühleigenschaften erreicht werden. Insbesondere kann dadurch ein besonders gut wärmeleitender Kontakt zwischen der Kühleinheit und der Werkzeugaufnahme geschaffen werden. Vorteilhaft kann eine automatisierte Anpassung einer Kontaktfläche des Kühlelements, welche dazu vorgesehen ist, die Werkzeugaufnahme zu einer Wärmeabführung zu kontaktieren, erreicht werden. Insbesondere ist die Rotationsbewegung des Kühlelements um die Rotationsachse steuerbar. Insbesondere ist die Steuer- und/oder Regeleinheit dazu vorgesehen, auf Basis von Daten der zu kühlenden Werkzeugaufnahme zur Auswahl der passenden Kontaktbereiche automatisiert das Kühlelement und/oder das weitere Kühlelement zu rotieren, bis der passende Kontaktbereich in Richtung der Werkzeugaufnahme ausgerichtet ist. Insbesondere umfasst die Ein- und/oder Ausschrumpfspannstation eine Eingabeeinheit, welche dazu vorgesehen ist, die Daten der zu kühlenden Werkzeugaufnahme zu erfassen und/oder an die Steuerund/oder Regeleinheit zu übermitteln. Die Eingabeeinheit umfasst insbesondere eine Schnittstelle zu einer manuellen Eingabe der Daten der zu kühlenden Werkzeugaufnahme und/oder eine Schnittstelle zu einer automatisierten Eingabe und/oder Erfassung der Daten der zu kühlenden Werkzeugaufnahme, beispielsweise ein QR-Code-Lesegerät, ein Strichcode-Lesegerät, ein RFID-Lesegerät und/oder eine automatische Kameraerkennung für Werkzeugaufnahmen.

Außerdem wird vorgeschlagen, dass das Kühlelement und/oder das weitere Kühlelement zumindest eine Düse aufweist, welche dazu vorgesehen ist, Kühlluft in Richtung einer zu kühlenden Werkzeugaufnahme abzugeben. Dadurch können vorteilhafte Kühleigenschaften erreicht werden. Insbesondere kann vorteilhaft eine Kühlfunktion weiter verbessert werden. Insbesondere kann dadurch bereits vorund/oder nach einer Herstellung eines direkten wärmeleitenden Kontakts durch die Kühlelemente, beispielsweise während eines Bewegens der Kühleinheit und/oder der Kühlelemente und/oder während eines Einstellens der passenden, insbesondere halbschaligen, Öffnung der Kühlelemente, ein Kühleffekt erzielt werden. Die Düse ist insbesondere innerhalb der, insbesondere halbschaligen, Öffnung des Kühlelements und/oder des weiteren Kühlelements angeordnet. Es ist denkbar, dass das Kühlelement und/oder das weitere Kühlelement mehr als eine Düse aufweisen.

Ferner wird ein Verfahren mit einer Ein- und/oder Ausschrumpfspannstation für Werkzeuge zu einem zumindest zu einem Großteil automatisierten Ein- und/oder Ausschrumpfen von Werkzeugen in und/oder aus Werkzeugaufnahmen vorgeschlagen. Dadurch können vorteilhafte Kühleigenschaften bei einer Kühlung von Schrumpfspannwerkzeugfuttern erreicht werden.

Weiterhin wird vorgeschlagen, dass bei dem Verfahren mit einer Ein- und/oder Ausschrumpfspannstation für Werkzeuge zu einer Positionierung der Kühleinheit, insbesondere zu einer Einstellung einer für den Kühlbetriebszustand vorgesehenen Position der Kühleinheit, relativ zu einer zuvor von der Induktionsheizeinheit erwärmten Werkzeugaufnahme und/oder relativ zu der Haltevorrichtung der Ein- und/oder Ausschrumpfspannstation eine identische Linearführung und/oder eine identische Antriebswelle verwendet wird wie zu einer Positionierung der Induktionsheizeinheit relativ zu der Werkzeugaufnahme, insbesondere zu einer Einstellung einer für den Induktionsheizbetriebszustand vorgesehenen Position der Induktionsheizeinheit. Dadurch können vorteilhafte Kühleigenschaften erreicht werden. Insbesondere kann vorteilhaft ein im Anschluss an ein Aufheizen der Werkzeugaufnahme stattfindender Kühlprozess des Einschrumpfvorgangs oder des Ausschrumpfvorgangs von Werkzeugen optimiert werden. Insbesondere kann der Einschrumpfvorgang oder der Ausschrumpfvorgang beschleunigt werden, insbesondere indem eine Zeit zwischen Erwärmen und Abkühlen besonders kurzgehalten werden kann. Zudem kann vorteilhaft ein hoher Automatisierungsgrad erreicht werden. Vorteilhaft kann eine hohe Arbeitssicherheit erreicht werden, insbesondere durch eine automatisierte Handhabung von heißen Werkzeugaufnahmen. Zudem kann vorteilhaft eine besonders einfache Bauweise der Ein- und/oder Ausschrumpfspannstation ermöglicht werden, wodurch vorteilhaft Kosten reduziert werden können. Insbesondere wird die Kühleinheit, insbesondere ein Schwerpunkt der Kühleinheit, in der Ein- und/oder Ausschrumpfspannstation, insbesondere während des gesamten Einschrumpfvorgangs, während des gesamten Ausschrumpfvorgangs, und/oder während des gesamten Kühlvorgangs, ausschließlich entlang der Axialrichtung der Kühleinheit, insbesondere entlang der Vertikalachse der Ein- und/oder Ausschrumpfspannstation, relativ zu der zu kühlenden Werkzeugaufnahme und/oder zu der Haltevorrichtung bewegt.

Des Weiteren wird vorgeschlagen, dass bei dem Verfahren mit einer Ein- und/oder Ausschrumpfspannstation für Werkzeuge zu einer Optimierung des wärmeleitenden Kontakts der Kühleinheit mit einer zuvor von der Induktionsheizeinheit erwärmten Werkzeugaufnahme, insbesondere von der Steuer- und/oder Regeleinheit, eine Auswahl einer möglichst passenden Kontaktfläche zumindest eines Kühlelements der Kühleinheit aus einer Mehrzahl an unterschiedlich geformten Kontaktflächen des Kühlelements mittels einer Rotation des Kühlelements, insbesondere um die Rotationsachse des Kühlelements, getroffen wird. Dadurch können vorteilhafte Kühleigenschaften erreicht werden. Insbesondere kann dadurch ein besonders gut wärmeleitender Kontakt zwischen der Kühleinheit und der Werkzeugaufnahme geschaffen werden, insbesondere indem für jede zu kühlende Werkzeugaufnahme eine passende Kontaktfläche ausgewählt werden kann. Vorteilhaft kann eine automatisierte Anpassung einer Kontaktfläche des Kühlelements, welche dazu vorgesehen ist, die Werkzeugaufnahme zu einer Wärmeabführung zu kontaktieren, erreicht werden. Unter einer "möglichst passenden Kontaktfläche" soll insbesondere die Kontaktfläche aus einer Mehrzahl an verfügbaren Kontaktflächen verstanden werden, welche die größte Ähnlichkeit zu eine Außenform der zu kühlenden Werkzeugaufnahme, insbesondere des zu kühlenden Spannbereichs der Werkzeugaufnahme, aufweist und/oder deren zugehörige, insbesondere halbschalige, Öffnung einen Durchmesser aufweist, welcher größer ist als der Durchmesser der zu kühlenden Werkzeugaufnahme, insbesondere des zu kühlenden Spannbereichs der Werkzeugaufnahme, und welcher zugleich einen geringsten Unterschied zu dem Durchmesser der Werkzeugaufnahme, insbesondere des zu kühlenden Spannbereichs der Werkzeugaufnahme, aufweist. Insbesondere sind die unterschiedlich geformten Kontaktflächen als, insbesondere halbschalige, Öffnung mit unterschiedlichen Durchmessern ausgebildet.

Die erfindungsgemäße Ein- und/oder Ausschrumpfspannstation und das erfindungsgemäße Verfahren sollen hierbei nicht auf die beschriebene Anwendung, Ausführungsform und/oder Verfahrensabfolge beschränkt sein. Insbesondere kann die erfindungsgemäße Ein- und/oder Ausschrumpfspannstation und das erfindungsgemäße Verfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen. Insbesondere kann eine genannte Abfolge von Verfahrensschritten variieren.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische, perspektivische Ansicht einer Ein- und/oder Ausschrumpfspannstation mit einer Kühleinheit,
- Fig. 2: eine schematische Draufsicht auf die Kühleinheit in einem Kühlbetriebszustand,
- Fig. 3: eine schematische Draufsicht auf die Kühleinheit in einem von dem Kühlbetriebszustand verschiedenen Betriebszustand,
- Fig. 4: ein Ablaufdiagramm eines Verfahrens mit der die Kühleinheit aufweisenden Ein- und/oder Ausschrumpfspannstation,
- Fig. 5: eine schematische Draufsicht auf eine alternative Kühleinheit in einem Kühlbetriebszustand,
- Fig. 6: eine schematische Draufsicht auf die alternative Kühleinheit in einem von dem Kühlbetriebszustand verschiedenen Betriebszustand und
- Fig. 7: ein Ablaufdiagramm eines Verfahrens mit einer die alternative Kühleinheit aufweisenden alternativen Ein- und/oder Ausschrumpfspannstation.

### Beschreibung der Ausführungsbeispiele

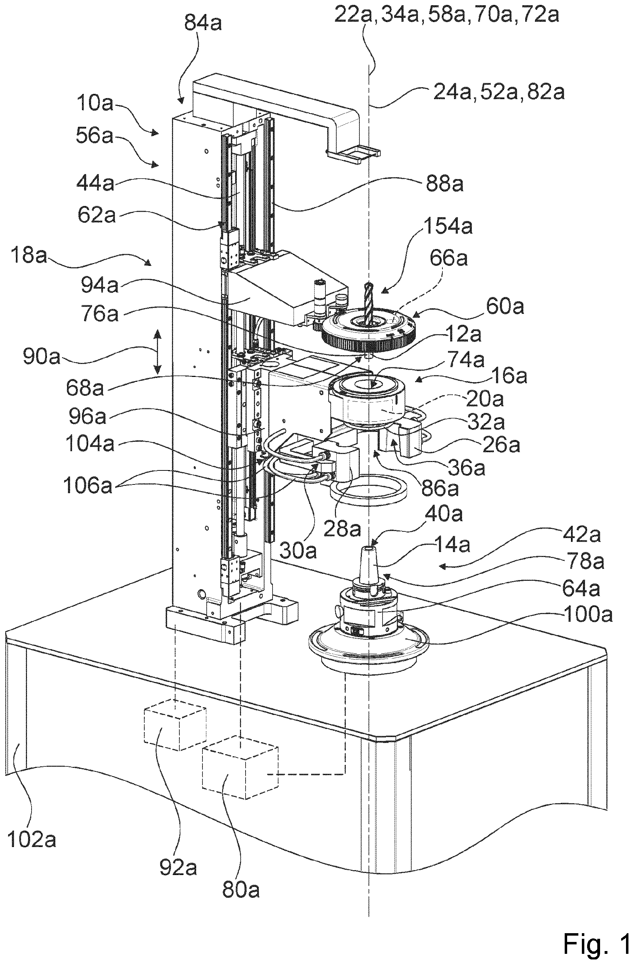

Fig. 1 zeigt eine Ein- und/oder Ausschrumpfspannstation 18a. Die Ein- und/oder Ausschrumpfspannstation 18a ist zu einem automatisierten Ein- und/oder Ausschrumpfen von Werkzeugen 12a in und/oder aus Werkzeugaufnahmen 14a vorgesehen. Die Ein- und/oder Ausschrumpfspannstation 18a ist zu einer Durchführung eines Einschrumpfvorgangs an Werkzeugen 12a zur Befestigung der Werkzeuge 12a in Werkzeugaufnahmen 14a und/oder zu einer Durchführung eines Ausschrumpfvorgangs an Werkzeugen 12a zur Entnahme der Werkzeuge 12a aus Werkzeugaufnahmen 14a vorgesehen. Die Werkzeugaufnahmen 14a sind als Schrumpfspannfutter ausgebildet. Die Werkzeugaufnahmen 14a weisen Werkzeugaufnahmeöffnungen 40a auf. Die Werkzeuge 12a sind als Schaftwerkzeuge ausgebildet. Die Werkzeuge 12a weisen einen Werkzeugschaft 76a auf. Die Werkzeuge 12a weisen einen Arbeitsbereich 154a auf. Die Werkzeugaufnahmeöffnungen 40a der Werkzeugaufnahmen 14a sind dazu vorgesehen, den Werkzeugschaft 76a eines Werkzeugs 12a aufzunehmen. Vorzugsweise ist der Werkzeugschaft 76a in einem in die Werkzeugaufnahme 14a eingespannten Zustand nahezu vollständig, insbesondere bis auf einen höchstens 5 mm, vorzugsweise höchstens 3 mm, bevorzugt höchstens 2 mm messenden Bereich in die Werkzeugaufnahmeöffnung 40a der Werkzeugaufnahme 14a eingesteckt.

Die Ein- und/oder Ausschrumpfspannstation 18a weist eine Induktionsheizeinheit 16a auf. Die Induktionsheizeinheit 16a ist zu einem Erhitzen der Werkzeugaufnahmen 14a vorgesehen. Die Induktionsheizeinheit 16a ist dazu vorgesehen, die Werkzeugaufnahmeöffnung 40a der Werkzeugaufnahme 14a bei dem Einschrumpfvorgang und/oder bei dem Ausschrumpfvorgang durch ein Erhitzen aufzuweiten. Die Induktionsheizeinheit 16a weist eine Induktionsspule 20a auf. Die Induktionsheizeinheit 16a ist dazu vorgesehen, ein Induktionsmagnetfeld zu erzeugen. Das Induktionsmagnetfeld ist dazu vorgesehen, mit dem Material der Werkzeugaufnahme 14a zu einer Erhitzung und damit zu einer Aufweitung der Werkzeugaufnahme 14a wechselzuwirken. Die Induktionsspule 20a weist eine Öffnung 74a auf. Die Öffnung 74a der Induktionsspule 20a ist parallel zu einer Axialrichtung 58a der Ein- und/oder Ausschrumpfspannstation 18a ausgerichtet. Die Induktionsspule 20a umfasst Spulenwicklungen, welche um die Öffnung 74a der Induktionsspule 20a gewickelt sind. Die Ein- und/oder Ausschrumpfspannstation 18a weist eine Steuer- und/oder Regeleinheit 80a auf. Die Steuer- und/oder Regeleinheit 80a ist zumindest dazu vorgesehen, eine Beaufschlagung der Induktionsspule 20a mit Wechselstrom zu einer Erzeugung eines Induktionsmagnetfelds zu beaufschlagen.

Die Ein- und/oder Ausschrumpfspannstation 18a weist eine Abschirmeinheit 60a auf. Die Abschirmeinheit 60a ist dazu vorgesehen, das durch die Induktionsheizeinheit 16a erzeugte Induktionsmagnetfeld zumindest in einer Axialrichtung 24a der Induktionsspule 20a abzuschirmen. Die Axialrichtung 24a der Induktionsspule 20a erstreckt sich entlang eines Zentrums der Öffnung 74a der Induktionsspule 20a. Die Axialrichtung 24a der Induktionsspule 20a entspricht einer Axialrichtung 70a der Abschirmeinheit 60a. Die Axialrichtung 24a der Induktionsspule 20a entspricht einer Axialrichtung 34a einer in der Ein- und/oder Ausschrumpfspannstation 18a positionierten Werkzeugaufnahme 14a. Die Axialrichtung 24a der Induktionsspule 20a entspricht einer Axialrichtung 72a eines in einer in der Ein- und/oder Ausschrumpfspannstation 18a positionierten Werkzeugaufnahme 14a befestigten Werkzeugs 12a. Die Abschirmeinheit 60a ist entlang einer Vertikalachse 82a der Ein- und/oder Ausschrumpfspannstation 18a oberhalb der Induktionsheizeinheit 16a angeordnet. Die Abschirmeinheit 60a ist dazu vorgesehen, das Induktionsmagnetfeld der Induktionsheizeinheit 16a in Richtung der Vertikalachse 82a nach oben abzuschirmen.

Die Abschirmeinheit 60a umfasst eine Anordnung von beweglich gelagerten Abschirmelementen 66a. Die beweglich gelagerten Abschirmelemente 66a sind derart zueinander bewegbar, dass sie den Werkzeugschaft 76a eines Werkzeugs 12a möglichst komplett umschießen können und somit einen möglichst hohen Abschirmungsgrad erzeugen können. Die beweglich gelagerten Abschirmelemente 66a sind derart relativ zueinander verschiebbar, dass sie eine zumindest im Wesentlichen geschlossene Abschirmebene mit einer variablen Öffnung zur Aufnahme von Werkzeugen 12a mit verschiedenen Durchmessern, ausbilden. Die Abschirmelemente 66a sind aus einem weichmagnetischen Material ausgebildet. Die Abschirmelemente 66a sind aus einem elektrisch nichtleitenden Material ausgebildet. Die Abschirmelemente 66a sind aus einem weichmagnetischen Ferritwerkstoff ausgebildet.

Die Abschirmeinheit 60a bildet zugleich eine Werkzeuggreifereinheit 68a aus. Die Abschirmeinheit 60a und die Werkzeuggreifereinheit 68a sind einstückig miteinander ausgebildet. Die Werkzeuggreifereinheit 68a ist dazu vorgesehen, ein Werkzeug 12a zur Durchführung eines Einschrumpfvorgangs in eine Werkzeugaufnahme 14a einzusetzen. Die Werkzeuggreifereinheit 68a ist dazu vorgesehen, ein Werkzeug 12a zu einer Durchführung eines Ausschrumpfvorgangs aus der Werkzeugaufnahme 14a zu entnehmen.

Die Ein- und/oder Ausschrumpfspannstation 18a weist eine Turmeinheit 84a auf. Die Turmeinheit 84a, insbesondere eine Haupterstreckungsrichtung 90a der Turmeinheit 84a, erstreckt sich parallel zu der Vertikalachse 82a der Ein- und/oder Ausschrumpfspannstation 18a. Die Abschirmeinheit 60a ist an der Turmeinheit 84a beweglich gelagert. Die Abschirmeinheit 60a umfasst einen Schlitten 94a. Der Schlitten 94a der Abschirmeinheit 60a ist zu der beweglichen Lagerung der Abschirmeinheit 60a an der Turmeinheit 84a vorgesehen. Vorzugsweise umfasst die Abschirmeinheit 60a zumindest zwei Schlitten 94a, wodurch vorteilhaft eine besonders hohe Präzision der Bewegung der Abschirmeinheit 60a erreicht werden kann. Die Abschirmeinheit 60a ist entlang der Haupterstreckungsrichtung 90a der Turmeinheit 84a an der Turmeinheit 84a auf- und abbewegbar. Die Abschirmeinheit 60a ist CNC-gesteuert an der Turmeinheit 84a auf- und abbewegbar. Die Steuer- und/oder Regeleinheit 80a ist dazu vorgesehen, die Bewegung der Abschirmeinheit 60a entlang der Turmeinheit 84a zu steuern. Die Induktionsheizeinheit 16a ist an der Turmeinheit 84a beweglich gelagert. Die Induktionsheizeinheit 16a umfasst einen Schlitten 96a. Der Schlitten 96a der Induktionsheizeinheit 16a ist zu der beweglichen Lagerung der Induktionsheizeinheit 16a an der Turmeinheit 84a vorgesehen. Vorzugsweise umfasst die Induktionsheizeinheit 16a zumindest zwei Schlitten 96a, wodurch vorteilhaft eine besonders hohe Präzision der Bewegung der Induktionsheizeinheit 16a erreicht werden kann. Die Induktionsheizeinheit 16a ist entlang der Haupterstreckungsrichtung 90a der Turmeinheit 84a an der Turmeinheit 84a auf-und abbewegbar. Die Induktionsheizeinheit 16a ist CNC-gesteuert an der Turmeinheit 84a auf- und abbewegbar. Die Steuer- und/oder Regeleinheit 80a ist dazu vorgesehen, die Bewegung der Induktionsheizeinheit 16a entlang der Turmeinheit 84a zu steuern. Die Turmeinheit 84a umfasst zumindest eine Führungseinheit 62a mit zumindest einer Führungsschiene 88a zu einer Führung einer Bewegung der Induktionsheizeinheit 16a und/oder der Abschirmeinheit 60a. Vorzugsweise weist die Führungseinheit 62a zwei parallel entlang der Haupterstreckungsrichtung 90a der Turmeinheit 84a verlaufende Führungsschienen 88a auf. Dadurch kann vorteilhaft eine besonders lineare Bewegungsführung erreicht werden. Die Induktionsheizeinheit 16a und die Abschirmeinheit 60a bilden entlang der Axialrichtung 24a relativ zueinander bewegbare Baueinheiten aus.

Die Ein- und/oder Ausschrumpfspannstation 18a umfasst eine Antriebswelle 44a. Die Antriebswelle 44a ist zumindest zu einem Großteil in der Turmeinheit 84a angeordnet. Die Antriebswelle 44a ist dazu vorgesehen, mit der Werkzeuggreifereinheit 68a, insbesondere der Abschirmeinheit 60a, zu koppeln. Die Antriebswelle 44a ist dazu vorgesehen, mit der Induktionsheizeinheit 16a zu koppeln. In dem mit der Antriebswelle 44a gekoppelten Zustand bewegt sind die Werkzeuggreifereinheit 68a und/oder die Induktionsheizeinheit 16a bei einer Rotation der Antriebswelle 44a entlang der Axialrichtung 24a auf- oder abwärts, je nach Rotationsrichtung der Antriebswelle 44a. Die Induktionsheizeinheit 16a ist über ein Rollringgetriebe mit der Antriebswelle 44a koppelbar. Die Werkzeuggreifereinheit 68a ist über ein weiteres Rollringgetriebe mit der Antriebswelle 44a koppelbar. Die Rollringgetriebe bilden zusammen mit der Antriebswelle 44a jeweils einen Uhing-Antrieb aus. Zu einer Kopplung mit der Antriebswelle 44a wird eine dem jeweiligen Rollringgetriebe zugeordnete Uhing-Mutter auf die Antriebswelle 44a geklemmt, beispielsweise mechanisch, pneumatisch oder hydraulisch.

Die Ein- und/oder Ausschrumpfspannstation 18a weist eine Haltevorrichtung 42a auf. Die Haltevorrichtung 42a ist zu einer Halterung einer Werkzeugaufnahme 14a in der Ein- und/oder Ausschrumpfspannstation 18a vorgesehen. Die Haltevorrichtung 42a umfasst eine Spindeleinheit 100a. Die Spindeleinheit 100a ist rotierbar. Die Spindeleinheit 100a ist fest mit einer Basiseinheit 102a der Einund/oder Ausschrumpfspannstation 18a verbunden. Die Haltevorrichtung 42a umfasst einen Vorsatzhalter 64a. Der Vorsatzhalter 64a ist austauschbar in die Spindeleinheit 100a einsetzbar. Der Vorsatzhalter 64a ist dazu vorgesehen, einen passenden Aufnahmebereich für einen jeweiligen bestimmten Werkzeugaufnahmetyp bereitzustellen.

Die Ein- und/oder Ausschrumpfspannstation 18a weist eine Kühleinheit 86a auf. Die Kühleinheit 86a ist entlang der Vertikalachse 82a gesehen unterhalb der Induktionsspule 20a angeordnet. Die Kühleinheit 86a ist in der Axialrichtung 24a der Induktionsheizeinheit 16a direkt unterhalb der Induktionsheizeinheit 16a angeordnet. Die Kühleinheit 86a ist zu einer Kühlung der Werkzeugaufnahme 14a im Anschluss an ein Einsetzen eines Werkzeugs 12a in die Werkzeugaufnahme 14a und/oder im Anschluss an ein Entnehmen eines Werkzeugs 12a aus der Werkzeugaufnahme 14a vorgesehen. Die Kühleinheit 86a ist zu einer Kühlung eines Spannbereichs 78a der Werkzeugaufnahme 14a im Anschluss an ein Einsetzen eines Werkzeugs 12a in die Werkzeugaufnahme 14a und/oder im Anschluss an ein Entnehmen eines Werkzeugs 12a aus der Werkzeugaufnahme 14a vorgesehen. Die Kühleinheit 86a ist dazu vorgesehen, die Werkzeugaufnahme 14a, insbesondere den Spannbereich 78a der Werkzeugaufnahme 14a auf eine handwarme Temperatur abzukühlen. Handwarme Temperaturen sind Temperaturen unterhalb von 50°C, vorzugsweise von unterhalb 40°C und bevorzugt von unterhalb 30°C. Die Kühleinheit 86a ist automatisiert in einen wärmeleitenden Kontakt mit einer zuvor durch die Induktionsheizeinheit 16a aufgeheizten Werkzeugaufnahme 14a verbringbar.

Die Ein- und/oder Ausschrumpfspannstation 18a weist eine Linearführung 10a auf. Die Kühleinheit 86a ist entlang der Linearführung 10a automatisiert verfahrbar. Die Kühleinheit 86a ist mittels der Linearführung 10a in der Axialrichtung 22a der Kühleinheit 86a automatisiert verfahrbar. Die Induktionsheizeinheit 16a ist entlang der Linearführung 10a automatisiert verfahrbar. Die Induktionsheizeinheit 16a ist mittels der Linearführung 10a in der Axialrichtung 24a der Induktionsheizeinheit 16a automatisiert verfahrbar. Die Linearführung 10a umfasst die Führungseinheit 62a. Die Linearführung 10a umfasst die Antriebswelle 44a. Die Linearführung 10a umfasst eine die Antriebswelle 44a antreibende Antriebseinheit (nicht gezeigt). Die Linearführung 10a erlaubt ausschließlich ein eindimensionales, translatorisches Verfahren der Induktionsheizeinheit 16a und/oder der Kühleinheit 86a. Die Kühleinheit 86a und die Induktionsheizeinheit 16a sind in einem montierten Zustand der Ein- und/oder Ausschrumpfspannstation 18a fest miteinander gekoppelt. Die Kühleinheit 86a und die Induktionsheizeinheit 16a sind einstückig miteinander ausgebildet. Die Kühleinheit 86a und die Induktionsheizeinheit 16a sind über den gleichen Schlitten 96a mit der Turmeinheit 84a gekoppelt bzw. an der Turmeinheit 84a gelagert. Die Kühleinheit 86a ist automatisiert auf eine in der Haltevorrichtung 42a gehalterte Werkzeugaufnahme 14a aufsetzbar. Die Linearführung 10a ist dazu vorgesehen, die Kühleinheit 86a durch eine Bewegung entlang der Vertikalachse 82a auf die in der Haltevorrichtung 42a gehalterte Werkzeugaufnahme 14a aufzusetzen und/oder die Kühleinheit 86a durch eine Bewegung entlang der Vertikalachse 82a von der in der Haltevorrichtung 42a gehalterten Werkzeugaufnahme 14a abzunehmen.

Die Kühleinheit 86a umfasst eine Luftkühlung. Die Luftkühlung ist insbesondere als eine Druckluftkühlung ausgebildet. Die Kühleinheit 86a umfasst eine Düse 38a. Die Düse 38a ist dazu vorgesehen, Kühlluft, insbesondere Druckluft, in eine Richtung senkrecht zu der Axialrichtung 24a der Induktionsspule 20a zu blasen. Die Düse 38a ist dazu vorgesehen, Kühlluft in Richtung einer Werkzeugaufnahme 14a zu blasen. Die Düse 38a ist dazu vorgesehen, Kühlluft auf eine zuvor durch die Induktionsheizeinheit 16a aufgeheizte Werkzeugaufnahme 14a zu blasen. Die Kühleinheit 86a umfasst einen Kühlring 32a. Die Luftkühlung umfasst den Kühlring 32a. Der Kühlring 32a ist dazu vorgesehen, während einem Kühlbetrieb, insbesondere in einem Kühlbetriebszustand, über eine zuvor aufgeheizte Werkzeugaufnahme 14a gestülpt zu werden. Der Kühlring 32a umfasst mehrere in Richtung eines Inneren des Kühlrings 32a angeordnete Düsen 38a. Die Induktionsspule 20a und der Kühlring 32a sind um eine gemeinsame Achse zentriert, welche sich entlang eines Zentrums der Öffnung 74a der Induktionsspule 20a erstreckt. Die Ein- und/oder Ausschrumpfspannstation 18a umfasst eine Drucklufterzeugungseinheit 92a. Die Drucklufterzeugungseinheit 92a ist dazu vorgesehen, Kühlluft für die Luftkühlung bereit zu stellen. Die Kühleinheit 86a umfasst eine erste Luftzufuhrleitung 98a. Die erste Luftzufuhrleitung 98a bildet eine druckluftleitende Verbindung zwischen der Düse 38a, insbesondere dem Kühlring 32a, und der Drucklufterzeugungseinheit 92a aus. Die Steuer- und/oder Regeleinheit 80a ist dazu vorgesehen, die Drucklufterzeugungseinheit 92a zu steuern, insbesondere zu aktivieren und/oder zu deaktivieren.

Die Linearführung 10a ist dazu vorgesehen, eine oszillierende Bewegung des Schlittens 96a erzeugen. Die Linearführung 10a ist dazu vorgesehen, eine oszillierende Bewegung der Kühleinheit 86a zu erzeugen. Die Linearführung 10a ist dazu vorgesehen, die Kühleinheit 86a, insbesondere den Kühlring 32a, während dem Kühlbetrieb, insbesondere in dem Kühlbetriebszustand, zu bewegen. Die Linearführung 10a ist dazu vorgesehen, die Kühleinheit 86a, insbesondere den Kühlring 32a, während dem Kühlbetrieb, insbesondere in dem Kühlbetriebszustand, oszillierend zu bewegen. Die Antriebseinheit der Linearführung 10a ist dazu vorgesehen, die relativ zu der Turmeinheit 84a oszillierende Bewegung der Kühleinheit 86a, insbesondere des Kühlrings 32a zu erzeugen. Dadurch kann vorteilhaft eine besonders effektive Kühlung und/oder eine gleichmäßige Verteilung einer Kühlleistung der Kühleinheit 86a, insbesondere des Kühlrings 32a erreicht werden.

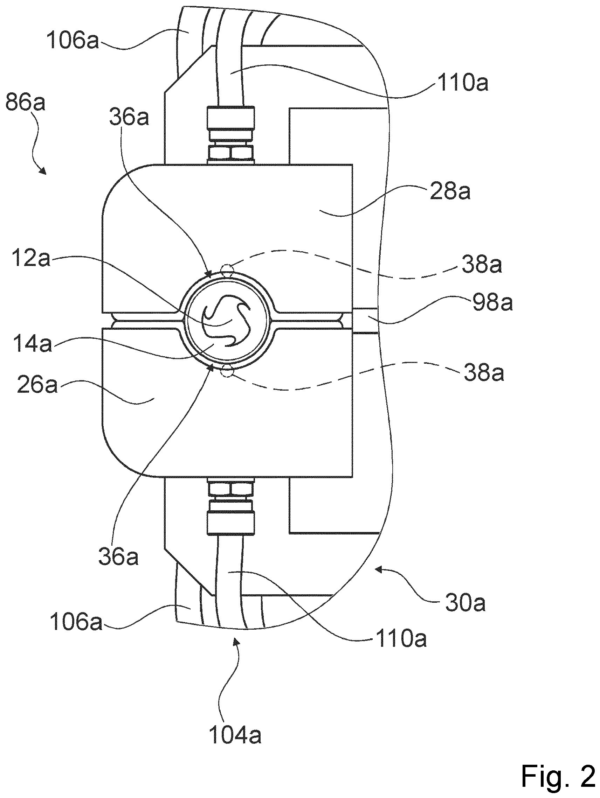

Die Kühleinheit 86a weist ein Kühlelement 26a auf. Die Kühleinheit 86a weist ein weiteres Kühlelement 28a auf. Das weitere Kühlelement 28a ist getrennt von dem Kühlelement 26a ausgebildet. Die Kühlelemente 26a, 28a sind dazu vorgesehen, sich in dem Kühlbetriebszustand in einem wärmeleitenden Kontakt mit einer zu kühlenden Werkzeugaufnahme 14a zu befinden (vgl. Fig. 2). Die Kühlelemente 26a, 28a sind dazu vorgesehen, die Werkzeugaufnahme 14a in dem Kühlbetriebszustand zu einem Großteil zu umgreifen. Die Kühlelemente 26a, 28a umgreifen in dem Kühlbetriebszustand die zu kühlende Werkzeugaufnahme 14a in Umfangsrichtung. Die Kühlelemente 26a, 28a umgreifen in dem Kühlbetriebszustand die zu kühlende Werkzeugaufnahme 14a zumindest im dem Spannbereich 78a der Werkzeugaufnahme 14a. Die Kühlelemente 26a, 28a berühren sich in dem Kühlbetriebszustand, in welchem sich die Kühlelemente 26a, 28a in einem wärmeleitenden Kontakt mit einer Werkzeugaufnahme 14a befinden, gegenseitig. Das Kühlelement 26a weist eine Öffnung 36a auf. Die Öffnung 36a ist als eine seitliche an dem Kühlelement 26a angeordnete, insbesondere halbrunde, Ausnehmung ausgebildet. Die Öffnung 36a des Kühlelements 28a ist als eine halbschalige Öffnung 36a ausgebildet. Das weitere Kühlelement 28a weist eine Öffnung 36a auf. Die Öffnung 36a ist als eine seitliche an dem weiteren Kühlelement 28a angeordnete, insbesondere halbrunde, Ausnehmung ausgebildet. Die Öffnung 36a des weiteren Kühlelements 28a ist als eine halbschalige Öffnung 36a ausgebildet. Die halbschaligen Öffnungen 36a sind jeweils dazu vorgesehen, etwa eine Hälfte eines Umfangs einer Werkzeugaufnahme 14a zu umgreifen. Die Öffnungen 36a der Kühlelemente 26a, 28a weisen jeweils eine Oberfläche 54a auf. Die Oberflächen 54a der Öffnungen 36a sind von einem flexiblen Gewebe ausgebildet. Das flexible Gewebe ist als ein Metallgewebe, insbesondere Kupfer- oder Aluminiumgewebe, ausgebildet. Das flexible Gewebe ermöglicht, dass sich die Oberfläche 54a einer Öffnung 36a in dem Kühlbetriebszustand an eine Außenform einer zu kühlenden Werkzeugaufnahme 14a anpasst.

Das Kühlelement 26a ist von einer Kühlflüssigkeit durchströmbar ausgebildet. Das weitere Kühlelement 28a ist von einer Kühlflüssigkeit durchströmbar ausgebildet. Die Ein- und/oder Ausschrumpfspannstation 18a weist eine Kühlmittelführung 104a auf. Die Kühlmittelführung 104a ist als ein Kühlkreislauf ausgebildet. Alternativ kann die Kühlmittelführung 104a auch nicht als Kreislauf ausgebildet sein, d.h. beispielsweise an eine externe Wasserversorgung angeschlossen sein. Die Kühlmittelführung 104a umfasst zumindest eine Umwälzvorrichtung (nicht gezeigt), beispielsweise eine Pumpe, welche dazu vorgesehen ist, eine Strömungsbewegung der Kühlflüssigkeit zu erzeugen. Die Kühlmittelführung 104a umfasst Kühlmittelleitungen 106a. Die Kühlmittelleitungen 106a sind zu einer Zuführung von Kühlflüssigkeit zu den Kühlelementen 26a, 28a und/oder zu einer Abführung von verbrauchter Kühlflüssigkeit von den Kühlelementen 26a, 28a vorgesehen. Wenn die Kühlmittelführung 104a als ein Kühlkreislauf ausgebildet ist, umfasst die Kühlmittelführung 104a zumindest eine Regenerationseinheit (nicht gezeigt), beispielsweise einen Wärmetauscher, welche dazu vorgesehen ist, von der Kühlflüssigkeit aufgenommene Wärme aus der Kühlflüssigkeit zu entnehmen und/oder regenerierte bzw. abgekühlte Kühlflüssigkeit erneut in den Kühlkreislauf einzuspeisen.

Das Kühlelement 26a weist die Düse 38a auf. Das weitere Kühlelement 28a weist die Düse 38a auf. Die Düsen 38a der Kühlelemente 26a, 28a sind dazu vorgesehen, Kühlluft in Richtung einer zu kühlenden Werkzeugaufnahme 14a abzugeben. Die Düsen 38a der Kühlelemente 26a, 28a sind dazu vorgesehen, Druckluft in Richtung einer zu kühlenden Werkzeugaufnahme 14a abzugeben. Die Düsen 38a der Kühlelemente 26a, 28a sind jeweils innerhalb einer Öffnung 36a des jeweiligen Kühlelements 26a, 28a angeordnet. Die Kühlelemente 26a, 28a weisen jeweils eine Luftzufuhrleitung 110a auf. Die Luftzufuhrleitung 110a der Kühlelemente 26a, 28a ist dazu vorgesehen, Kühlluft von der Drucklufterzeugungseinheit 92a zu den Düsen 38a der Kühlelemente 26a, 28a zu leiten. Die Luftzufuhrleitung 110a der Kühlelemente 26a, 28a verbindet die Drucklufterzeugungseinheit 92a mit den Düsen 38a der Kühlelemente 26a, 28a.

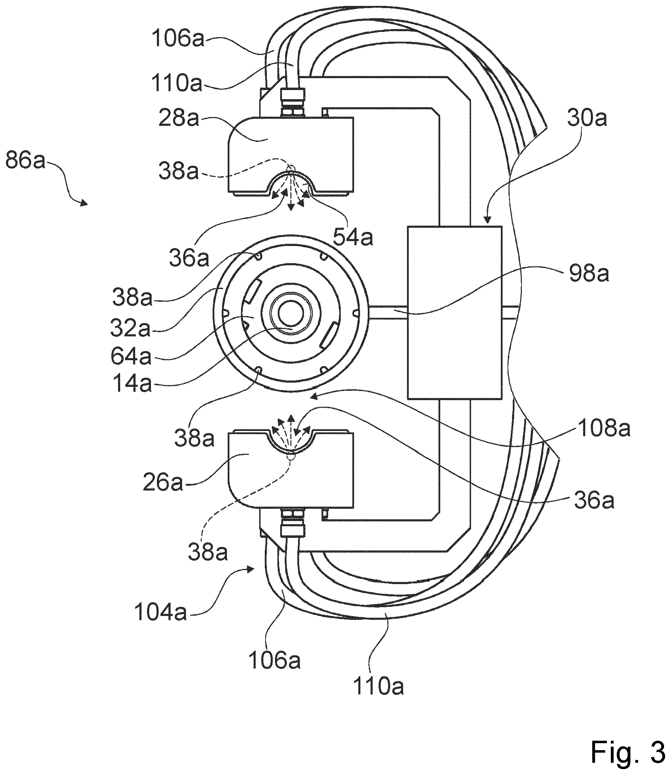

Das Kühlelement 26a und das weitere Kühlelement 28a sind relativ zueinander beweglich gelagert. Das Kühlelement 26a und das weitere Kühlelement 28a sind translatorisch zueinander bewegbar. Die Ein- und/oder Ausschrumpfspannstation 18a weist eine Lagereinheit 30a auf. Die Lagereinheit 30a ist dazu vorgesehen, das Kühlelement 26a und das weitere Kühlelement 28a relativ zueinander beweglich zu lagern. Das Kühlelement 26a und das weitere Kühlelement 28a sind mittels der Lagereinheit 30a zumindest in einer Ebene senkrecht zu der Axialrichtung 34a einer in der Ein- und/oder Ausschrumpfspannstation 18a positionierten Werkzeugaufnahme 14a bewegbar. Die Kühlelemente 26a, 28a sind mittels der Lagereinheit 30a aufeinander zu und/oder voneinander weg bewegbar. Die Lagereinheit 30a ist dazu vorgesehen, die Kühlelemente 26a, 28a außerhalb des Kühlbetriebszustands in Positionen zu verbringen, welche ein behinderungsfreies Aufsetzen der Induktionsheizeinheit 16a auf die Werkzeugaufnahme 14a durch eine Bewegung der Induktionsheizeinheit 16a entlang der Vertikalachse 82a erlaubt (vgl. Fig. 3). In der Position, in der das behinderungsfreie Aufsetzen der Induktionsheizeinheit 16a auf die Werkzeugaufnahme 14a möglich ist, sind die Kühlelemente 26a, 28a voneinander beabstandet, insbesondere derart, dass die gesamte Werkzeugaufnahme 14a entlang der Axialrichtung 34a der Werkzeugaufnahme 14a und/oder zumindest ein oberer Teil der entlang der Vertikalachse 82a ausgerichteten Haltevorrichtung 42a in einen zwischen den Kühlelementen 26a, 28a entstehenden Zwischenraum 108a hinein passen. In dem Kühlbetriebszustand sind die Kühlelemente 26a, 28a durch die Lagereinheit 30a soweit wie möglich zusammengeschoben. In dem Kühlbetriebszustand sind die Kühlelemente 26a, 28a durch die Lagereinheit 30a derart zusammengeschoben, dass sich die Kühlelemente 26a, 28a gegenseitig berühren. Die Lagereinheit 30a umfasst eine Antriebseinheit (nicht gezeigt), welche dazu vorgesehen ist, die Bewegung der Kühlelemente 26a, 28a relativ zueinander hydraulisch, pneumatisch und/oder elektromotorisch zu erzeugen. Die Steuer- und/oder Regeleinheit 80a ist dazu vorgesehen, die Bewegung der Kühlelemente 26a, 28a relativ zueinander zu steuern und/oder zu regeln.

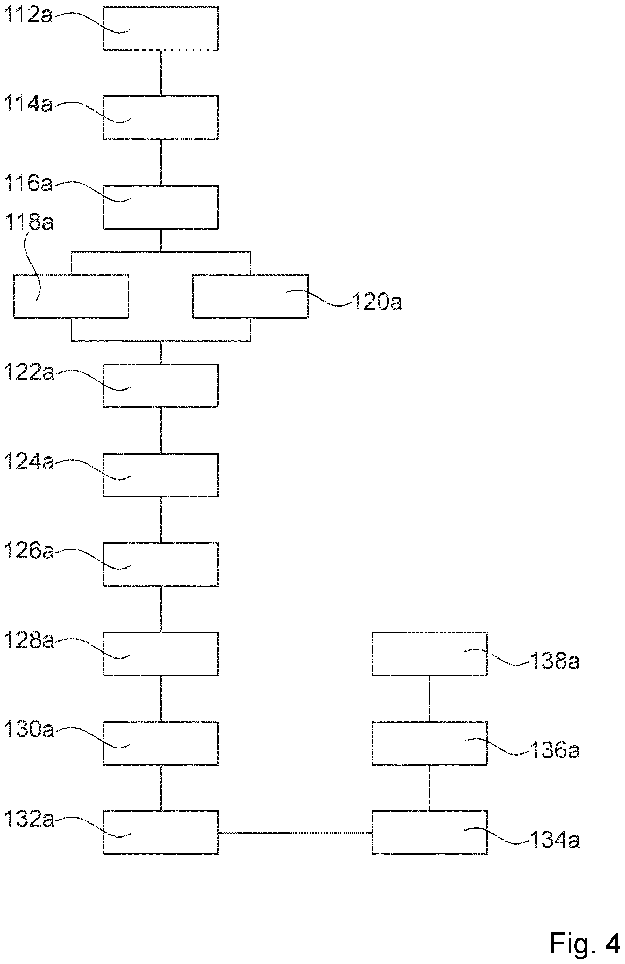

Fig. 4 zeigt ein Ablaufdiagramm eines Verfahrens mit der die Kühleinheit 86a aufweisenden Ein- und/oder Ausschrumpfspannstation 18a. In zumindest einem Verfahrensschritt 112a werden die Kühlelemente 26a, 28a derart in Richtungen senkrecht zu der Vertikalachse 82a der Ein- und/oder Ausschrumpfspannstation 18a bewegt, dass ein Abstand zwischen den Kühlelementen 26a, 28a vergrößert wird. In dem Verfahrensschritt 112a werden die Kühlelemente 26a, 28a in Positionen verbracht, welche ein behinderungsfreies Aufsetzen der Induktionsheizeinheit 16a auf die Werkzeugaufnahme 14a erlauben. In dem Verfahrensschritt 112a befindet sich die Kühleinheit 86a nicht in dem Kühlbetriebszustand. In zumindest einem weiteren Verfahrensschritt 114a wird die Induktionsheizeinheit 16a auf eine Werkzeugaufnahme 14a aufgesetzt. In dem Verfahrensschritt 114a wird die Induktionsheizeinheit 16a durch eine Bewegung entlang der Vertikalachse 82a nach unten auf die Werkzeugaufnahme 14a aufgesetzt. In dem Verfahrensschritt 114a werden die Kühlelemente 26a, 28a bei der Bewegung der Induktionsheizeinheit 16a kollisionsfrei seitlich an der Werkzeugaufnahme 14a und/oder kollisionsfrei seitlich an einem entlang der Vertikalachse 82a gesehenen oberen Teil der Haltevorrichtung 42a vorbeibewegt. In zumindest einem weiteren Verfahrensschritt 116a wird zumindest der Spannbereich 78a der Werkzeugaufnahme 14a durch ein Induktionsmagnetfeld der aufgesetzten Induktionsheizeinheit 16a erwärmt. In dem Verfahrensschritt 116a wird die Werkzeugaufnahmeöffnung 40a der Werkzeugaufnahme 14a derart aufgeweitet, dass ein Werkzeug 12a in die Werkzeugaufnahmeöffnung 40a eingesetzt werden kann oder dass ein Werkzeug 12a aus der Werkzeugaufnahmeöffnung 40a entnommen werden kann. In zumindest einem weiteren Verfahrensschritt 118a wird ein Werkzeug 12a in die aufgeweitete Werkzeugaufnahmeöffnung 40a der Werkzeugaufnahme 14a eingesetzt. Alternativ wird in zumindest einem weiteren Verfahrensschritt 120a ein Werkzeug 12a aus der aufgeweiteten Werkzeugaufnahmeöffnung 40a der Werkzeugaufnahme 14a entnommen.

In zumindest einem weiteren Verfahrensschritt 122a wird die Induktionsheizeinheit 16a durch ein Verfahren der Induktionsheizeinheit 16a entlang der Vertikalachse 82a nach oben von der erwärmten Werkzeugaufnahme 14a abgenommen. Während dem Verfahren der Induktionsheizeinheit 16a wird optional die Werkzeugaufnahme 14a mit Kühlluft aus den Düsen 38a des Kühlrings und/oder der Kühlelemente 26a, 28a beaufschlagt. In zumindest einem weiteren optionalen Verfahrensschritt 124a wird die Kühleinheit 86a oszillierend auf und abbewegt, so dass aus den Düsen 38a der Kühleinheit 86a ausströmende Kühlluft den gesamten erwärmten Bereich der Werkzeugaufnahme 14a, insbesondere den gesamten Spannbereich 78a, erreicht. In zumindest einem weiteren Verfahrensschritt 126a wird die Induktionsheizeinheit 16a und damit auch die mit der Induktionsheizeinheit 16a gekoppelte Kühleinheit 86a soweit entlang der Vertikalachse 82a verfahren, bis sich die Kühlelemente 26a, 28a der Kühleinheit 86a auf Höhe des erwärmten Bereichs der Werkzeugaufnahme 14a, insbesondere des Spannbereichs 78a, befinden. In den Verfahrensschritten 122a, 124a und 126a wird zu dem Verfahren, d.h. zu der Positionierung der Kühleinheit 86a relativ zu der zuvor von der Induktionsheizeinheit 16a erwärmten Werkzeugaufnahme 14a eine identische Linearführung 56a und/oder eine identische Antriebswelle 44a verwendet, wie zu einem Verfahren, d.h. wie zu einer Positionierung der Induktionsheizeinheit 16a relativ zu der Werkzeugaufnahme 14a. In zumindest einem weiteren Verfahrensschritt 128a werden die Kühlelemente 26a, 28a aufeinander zu bewegt. In dem Verfahrensschritt 128 wird der erwärmte Bereich der Werkzeugaufnahme 14a, insbesondere der Spannbereich 78a, von den Kühlelementen 26a, 28a umschlossen. In dem Verfahrensschritt 128a wird eine Oberfläche der Werkzeugaufnahme 14a von einer Oberfläche 54a einer Öffnung 36a, 46a der Kühlelemente 26a, 28a kontaktiert. In zumindest einem weiteren Verfahrensschritt 130a wird Wärme von der Werkzeugaufnahme 14a an die Kühlelemente 26a, 28a abgegeben. In dem Verfahrensschritt 130a werden die Kühlelemente 26a, 28 von der Kühlflüssigkeit durchströmt. In dem Verfahrensschritt 130a wird die Werkzeugaufnahme 14a aktiv gekühlt. In zumindest einem weiteren Verfahrensschritt 132a wird durch die Kühlelemente 26a, 28a aufgenommene Wärme mittels der Kühlflüssigkeit über die Kühlmittelführung 104a abtransportiert.

In zumindest einem weiteren Verfahrensschritt 134a werden die Kühlelemente 26a, 28a von der Werkzeugaufnahme 14a entfernt. In dem Verfahrensschritt 134a werden die Kühlelemente 26a, 28a in Positionen verbracht, welche ein behinderungsfreies Aufsetzen der Induktionsheizeinheit 16a auf die Werkzeugaufnahme 14a erlauben. In zumindest einem weiteren Verfahrensschritt 136a werden die Induktionsheizeinheit 16a und die Kühleinheit 86a entlang der Vertikalachse 82a nach oben von der abgekühlten Werkzeugaufnahme 14a weggefahren. In zumindest einem weiteren Verfahrensschritt 138a wird die abgekühlte Werkzeugaufnahme 14a aus der Haltevorrichtung 42a entfernt. Das Entfernen der Werkzeugaufnahme 14a aus der Haltevorrichtung 42a kann mechanisiert mittels eines Handhabungsroboters (nicht gezeigt) oder manuell durch einen Bediener vorgenommen werden. Durch das Abkühlen der Werkzeugaufnahme 14a besteht vorteilhaft keine Verletzungsgefahr, insbesondere keine Verbrennungsgefahr, für den Bediener.

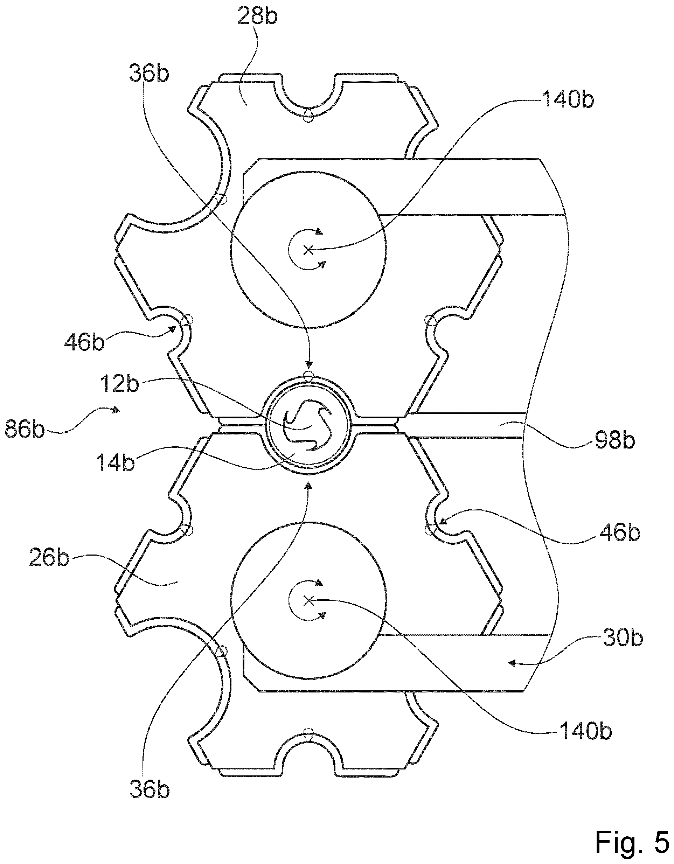

In den Figuren 5, 6 und 7 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5, 6 und 7 ist der Buchstabe a durch den Buchstaben b ersetzt.

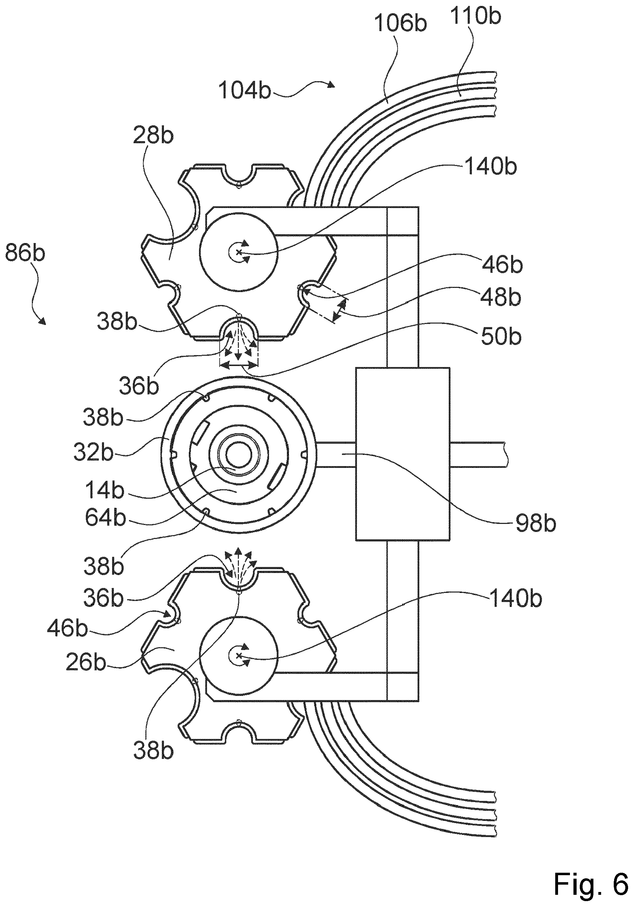

Fig. 5 und 6 zeigen Draufsichten auf eine alternative Kühleinheit 86b einer alternativen Ein- und/oder Ausschrumpfspannstation 18b. Die Kühleinheit 86b weist ein Kühlelement 26b auf. Die Kühleinheit 86b weist ein weiteres Kühlelement 28b auf. In der Fig. 5 befinden sich die Kühlelemente 26b, 28b in einer Anordnung, welche die Kühlelemente 26b, 28b in einem Kühlbetriebszustand einnehmen. In der Fig. 6 befinden sich die Kühlelemente 26b, 28b in einer Anordnung, welche die Kühlelemente 26b, 28b außerhalb des Kühlbetriebszustands einnehmen. Das weitere Kühlelement 28b ist getrennt von dem Kühlelement 26b ausgebildet. Die Kühlelemente 26b, 28b weisen jeweils eine weitere halbschalige Öffnung 46b auf. Die weitere Öffnung 46b ist jeweils als weitere halbschalige Öffnung 46b ausgebildet. Die weitere Öffnung 46b ist wie die Öffnung 36b ebenfalls dazu vorgesehen, etwa eine Hälfte des Umfangs einer Werkzeugaufnahme 14b zu umgreifen. Die Öffnung 36b weist einen Durchmesser 50b auf. Die weitere Öffnung 46b weist einen Durchmesser 48b auf. Der Durchmesser 48b der weiteren Öffnung 46b ist verschieden von dem Durchmesser 50b der Öffnung 36b. Insgesamt weisen die in Fig. 5 dargestellten Kühlelemente 26b, 28b jeweils sechs Öffnungen unterschiedlicher Durchmesser auf. Die Öffnungen 36b, 46b der Kühlelemente 26b, 28b sind in Umfangsrichtung um die Kühlelemente 26b, 28b angeordnet. Jede Öffnung 36b, 46b weist zumindest eine Düse 38b zur Abgabe von Kühlluft in Richtung einer Werkzeugaufnahme 14b auf. Die Öffnungen 36b, 46b bilden eine Mehrzahl an unterschiedlich geformten Kontaktflächen des Kühlelements 26b, 28b aus.

Das Kühlelement 26b ist um eine Rotationsachse 52b rotierbar. Das weitere Kühlelement 28b ist um eine Rotationsachse 140b rotierbar. Die Rotationsachse 52b des Kühlelements 26b und die Rotationsachse 140b des weiteren Kühlelements 28b sind parallel zueinander ausgerichtet. Die Rotationsachse 52b des Kühlelements 26b und die Rotationsachse 140b des weiteren Kühlelements 28b verlaufen parallel zu einer Vertikalachse 82b der Ein- und/oder Ausschrumpfspannstation 18b und/oder parallel zu einer Axialrichtung 22b der Kühleinheit 86b. Die Rotationsachsen 52b, 140b verlaufen zentral durch die Kühlelemente 26b, 28b. Die Rotationsachsen 52b, 140b verlaufen in etwa durch Schwerpunkte der Kühlelemente 26b, 28b. Mittels einer Rotationsbewegung der Kühlelemente 26b, 28b um die jeweiligen Rotationsachsen 52b, 140b ist ein passender Kontaktbereich der Kühlelemente 26b; 28b zu einem wärmeleitenden Kontakt der Kühlelemente 26b; 28b mit einer abzukühlenden Werkzeugaufnahme 14b auswählbar. Die Kühlelemente 26b, 28b sind revolverartig zur Auswahl der passenden Kontaktbereiche und/oder zur Auswahl der passenden Öffnungen 36b, 46b rotierbar.

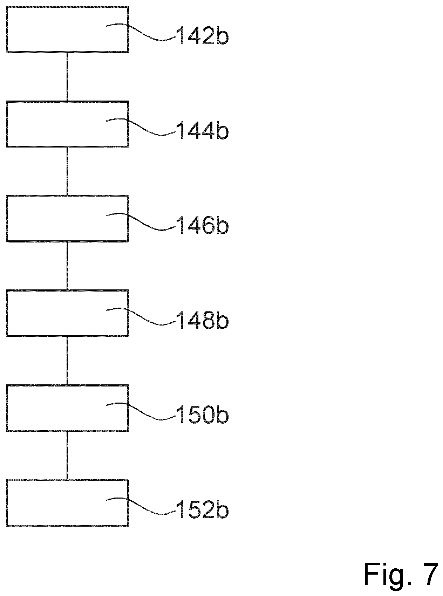

Fig. 7 zeigt ein Ablaufdiagramm eines Verfahrens mit einer die alternative Kühleinheit 86b aufweisenden alternativen Ein- und/oder Ausschrumpfspannstation 18b. In zumindest einem Verfahrensschritt 142b werden voneinander beabstandete Kühlelemente 26b, 28b entlang der Vertikalachse 82b auf Höhe eines zuvor erwärmten Bereichs einer Werkzeugaufnahme 14b, insbesondere auf Höhe eines Spannbereichs 78b der Werkzeugaufnahme 14b, positioniert. In zumindest einem weiteren Verfahrensschritt 144b wird auf Basis von einen Werkzeugaufnahmetyp bestimmenden Daten der Werkzeugaufnahme 14b eine Einstellung der Rotationsposition der Kühlelemente 26b, 28b vorgenommen. In dem Verfahrensschritt 144b werden die Kühlelemente 26b, 28b um deren Rotationsachsen 52b, 140b rotiert. In dem Verfahrensschritt 144b wird zu einer Optimierung des wärmeleitenden Kontakts der Kühleinheit 86b mit einer zuvor von der Induktionsheizeinheit 16b erwärmten Werkzeugaufnahme 14b eine Auswahl einer möglichst passenden Kontaktfläche zumindest eines Kühlelements 26b, 28b der Kühleinheit 86b aus der Mehrzahl an unterschiedlich geformten Kontaktflächen des Kühlelements 26b, 28b mittels einer Rotation des Kühlelements 26b, 28b getroffen. In zumindest einem weiteren Verfahrensschritt 146b wird Kühlluft aus den Düsen 38b der durch die Rotation ausgewählten, in Richtung der Werkzeugaufnahme 14b zeigenden Öffnungen 36b, 46b in Richtung der zu kühlenden Werkzeugaufnahme 14b geblasen. In zumindest einem weiteren Verfahrensschritt 148b werden die Kühlelemente 26b, 28b aufeinander zubewegt, bis die Kühlelemente 26b, 28b die Werkzeugaufnahme 14b kontaktieren und/oder umfassen. In dem Verfahrensschritt 148b werden die Kühlelemente 26b, 28b aufeinander zubewegt, bis die Kühlelemente 26b, 28b sich gegenseitig berühren. In zumindest einem weiteren Verfahrensschritt 150b werden die Kühlelemente 26b, 28b von einer Kühlflüssigkeit durchströmt. In dem Verfahrensschritt 150b wird die Werkzeugaufnahme 14b aktiv gekühlt. In dem Verfahrensschritt 150b wird Wärme von der Werkzeugaufnahme 14b an die Kühlelemente 26b, 28b übertragen. In zumindest einem weiteren Verfahrensschritt 152b wird die zu den Kühlelementen 26b, 28b übertragene Wärme von einer Kühlmittelführung 104b abtransportiert.

### Bezugszeichen

- 10: Linearführung
- 12: Werkzeug
- 14: Werkzeugaufnahme
- 16: Induktionsheizeinheit
- 18: Ein- und/oder Ausschrumpfspannstation
- 20: Induktionsspule
- 22: Axialrichtung
- 24: Axialrichtung
- 26: Kühlelement
- 28: Weiteres Kühlelement
- 30: Lagereinheit
- 32: Kühlring
- 34: Axialrichtung
- 36: Öffnung
- 38: Düse
- 40: Werkzeugaufnahmeöffnung
- 42: Haltevorrichtung
- 44: Antriebswelle
- 46: Weitere Öffnung
- 48: Durchmesser
- 50: Durchmesser
- 52: Rotationsachse
- 54: Oberfläche
- 56: Linearführung
- 58: Axialrichtung
- 60: Abschirmeinheit
- 62: Führungseinheit
- 64: Vorsatzhalter
- 66: Abschirmelement
- 68: Werkzeuggreifereinheit
- 70: Axialrichtung
- 72: Axialrichtung
- 74: Öffnung
- 76: Werkzeugschaft
- 78: Spannbereich
- 80: Steuer- und/oder Regeleinheit
- 82: Vertikalachse
- 84: Turmeinheit
- 86: Kühleinheit
- 88: Führungsschiene
- 90: Haupterstreckungsrichtung
- 92: Drucklufterzeugungseinheit
- 94: Schlitten
- 96: Schlitten
- 98: Erste Luftzufuhrleitung
- 100: Spindeleinheit
- 102: Basiseinheit
- 104: Kühlmittelführung
- 106: Kühlmittelleitungen
- 108: Zwischenraum
- 110: Luftzufuhrleitung
- 112: Verfahrensschritt
- 114: Verfahrensschritt
- 116: Verfahrensschritt
- 118: Verfahrensschritt
- 120: Verfahrensschritt
- 122: Verfahrensschritt
- 124: Verfahrensschritt
- 126: Verfahrensschritt
- 128: Verfahrensschritt
- 130: Verfahrensschritt
- 132: Verfahrensschritt
- 134: Verfahrensschritt
- 136: Verfahrensschritt
- 138: Verfahrensschritt
- 140: Rotationsachse
- 142: Verfahrensschritt
- 144: Verfahrensschritt
- 146: Verfahrensschritt
- 148: Verfahrensschritt
- 150: Verfahrensschritt
- 152: Verfahrensschritt
- 154: Arbeitsbereich

## Patentansprüche

1. Ein- und/oder Ausschrumpfspannstation (18a; 18b) für Werkzeuge (12a; 12b) zu einem zumindest zu einem Großteil automatisierten Ein- und/oder Ausschrumpfen von Werkzeugen (12a; 12b) in und/oder aus Werkzeugaufnahmen (14a; 14b), mit einer Induktionsheizeinheit (16a; 16b) und mit einer Kühleinheit (86a; 86b), **dadurch gekennzeichnet, dass** die Kühleinheit (86a; 86b) automatisiert in einen wärmeleitenden Kontakt mit einer zuvor durch die Induktionsheizeinheit (16a; 16b) aufgeheizten Werkzeugaufnahme (14a; 14b) verbringbar ist.

2. Ein- und/oder Ausschrumpfspannstation (18a; 18b) nach Anspruch 1, **gekennzeichnet durch** eine Linearführung (10a; 10b), entlang welcher zumindest die Kühleinheit (86a; 86b) und die Induktionsheizeinheit (16a; 16b) automatisiert verfahrbar sind, insbesondere in deren Axialrichtungen (22a, 24a; 22b, 24b).

3. Ein- und/oder Ausschrumpfspannstation (18a; 18b) nach Anspruch 1 oder 2, **dadurch gekennzeichnet, dass** die Kühleinheit (86a; 86b) und die Induktionsheizeinheit (16a; 16b) in einem montierten Zustand fest miteinander gekoppelt sind.

4. Ein- und/oder Ausschrumpfspannstation (18a; 18b) nach einem der vorhergehenden Ansprüche, **dadurch gekennzeichnet, dass** die Kühleinheit (86a; 86b) in einer Axialrichtung (24a; 24b) der Induktionsheizeinheit (16a; 16b) direkt unterhalb oder direkt oberhalb der Induktionsheizeinheit (16a; 16b) angeordnet ist.

5. Ein- und/oder Ausschrumpfspannstation (18a; 18b) nach einem der vorhergehenden Ansprüche, **dadurch gekennzeichnet, dass** die Kühleinheit (86a; 86b) zumindest eine Luftkühlung umfasst.

6. Ein- und/oder Ausschrumpfspannstation (18a; 18b) nach Anspruch 5, **dadurch gekennzeichnet, dass** die Luftkühlung einen Kühlring (32a; 32b) umfasst.

7. Ein- und/oder Ausschrumpfspannstation (18a; 18b) nach einem der vorhergehenden Ansprüche, **dadurch gekennzeichnet, dass** die Kühleinheit (86a; 86b) zumindest ein von einer Kühlflüssigkeit durchströmbares Kühlelement (26a; 26b) umfasst.

8. Ein- und/oder Ausschrumpfspannstation (18a; 18b) nach Anspruch 7, **dadurch gekennzeichnet, dass** die Kühleinheit (86a; 86b) zumindest ein weiteres von einer Kühlflüssigkeit durchströmbares Kühlelement (28a; 28b) umfasst, welches getrennt von dem Kühlelement (26a; 26b) ausgebildet ist.

9. Ein- und/oder Ausschrumpfspannstation (18a; 18b) nach Anspruch 7 und 8, **gekennzeichnet durch** eine Lagereinheit (30a; 30b), welche dazu vorgesehen ist, das Kühlelement (26a; 26b) und das weitere Kühlelement (28a; 28b) relativ zueinander beweglich zu lagern.

10. Ein- und/oder Ausschrumpfspannstation (18a; 18b) nach Anspruch 9, **dadurch gekennzeichnet, dass** das Kühlelement (26a; 26b) und das weitere Kühlelement (28a; 28b) mittels der Lagereinheit (30a; 30b) zumindest in einer Ebene senkrecht zu einer vorgesehenen Axialrichtung (34a; 34b) einer in der Ein- und/oder Ausschrumpfspannstation (18a; 18b) positionierten Werkzeugaufnahme (14a; 14b) bewegbar sind.

11. Ein- und/oder Ausschrumpfspannstation (18a; 18b) nach einem der Ansprüche 8 bis 10, **dadurch gekennzeichnet, dass** die Kühlelemente (26a, 28a; 26b, 28b) in einem Kühlbetriebszustand, in welchem sich die Kühlelemente (26a, 28a; 26b, 28b) in einem wärmeleitenden Kontakt mit einer Werkzeugaufnahme (14a; 14b) befinden, dazu vorgesehen sind, die Werkzeugaufnahme (14a; 14b) zumindest zu einem Großteil zu umgreifen.

12. Ein- und/oder Ausschrumpfspannstation (18a; 18b) nach einem der Ansprüche 8 bis 11, **dadurch gekennzeichnet, dass** sich die Kühlelemente (26a, 28a; 26b, 28b) in einem Kühlbetriebszustand, in welchem sich die Kühlelemente (26a, 28a; 26b, 28b) in einem wärmeleitenden Kontakt mit einer Werkzeugaufnahme (14a; 14b) befinden, gegenseitig berühren.

13. Ein- und/oder Ausschrumpfspannstation (18a; 18b) nach einem der Ansprüche 9 bis 12, **dadurch gekennzeichnet, dass** die Lagereinheit (30a; 30b) dazu vorgesehen ist, die Kühlelemente (26a, 28a; 26b, 28b) außerhalb eines Kühlbetriebszustands in Positionen zu verbringen, welche ein behinderungsfreies Aufsetzen der Induktionsheizeinheit (16a; 16b) auf die Werkzeugaufnahme (14a; 14b) erlaubt.

14. Ein- und/oder Ausschrumpfspannstation (18a; 18b) zumindest nach Anspruch 7, **dadurch gekennzeichnet, dass** das Kühlelement (26a, 28a; 26b, 28b) eine Öffnung (36a; 36b) aufweist, welche dazu vorgesehen ist, etwa eine Hälfte eines Umfangs einer Werkzeugaufnahme (14a; 14b) zu umgreifen.

15. Ein- und/oder Ausschrumpfspannstation (18a; 18b) nach Anspruch 14, **dadurch gekennzeichnet, dass** zumindest ein Teil der Oberfläche (54a; 54b) der Öffnung (36a; 36b) von einem flexiblen Gewebe ausgebildet ist.

16. Ein- und/oder Ausschrumpfspannstation (18b) nach Anspruch 14 oder 15, **dadurch gekennzeichnet, dass** das Kühlelement (26b, 28b) zumindest eine weitere Öffnung (46b) aufweist, welche ebenfalls dazu vorgesehen ist, etwa eine Hälfte eines Umfangs einer Werkzeugaufnahme (14b) zu umgreifen, wobei ein Durchmesser (48b) der weiteren Öffnung (46b) verschieden ist von einem Durchmesser (50b) der Öffnung (36b).

17. Ein- und/oder Ausschrumpfspannstation (18b) zumindest nach Anspruch 7, **dadurch gekennzeichnet, dass** das Kühlelement (26b, 28b) rotierbar ist.

18. Ein- und/oder Ausschrumpfspannstation (18b) nach Anspruch 17, **dadurch gekennzeichnet, dass** mittels einer Rotationsbewegung des Kühlelements (26b, 28b) um eine Rotationsachse (52b, 140b) ein passender Kontaktbereich des Kühlelements (26b; 28b), welcher zu einem wärmeleitenden Kontakt des Kühlelements (26b; 28b) mit einer Werkzeugaufnahme (14b) vorgesehen ist, auswählbar ist.

19. Ein- und/oder Ausschrumpfspannstation (18a; 18b) zumindest nach Anspruch 7 oder 8, **dadurch gekennzeichnet, dass** das Kühlelement (26a; 26b) und/oder das weitere Kühlelement (28a; 28b) zumindest eine Düse (38a; 38b) aufweist, welche dazu vorgesehen ist, Kühlluft in Richtung einer zu kühlenden Werkzeugaufnahme (14a; 14b) abzugeben.

20. Verfahren mit einer Ein- und/oder Ausschrumpfspannstation (18a; 18b) für Werkzeuge (12a; 12b) zu einem zumindest zu einem Großteil automatisierten Ein- und/oder Ausschrumpfen von Werkzeugen (12a; 12b) in und/oder aus Werkzeugaufnahmen (14a; 14b) nach einem der vorhergehenden Ansprüche.

21. Verfahren nach Anspruch 20, **dadurch gekennzeichnet, dass** zu einer Positionierung der Kühleinheit (86a; 86b) relativ zu einer zuvor von der Induktionsheizeinheit (16a; 16b) erwärmten Werkzeugaufnahme (14a; 14b) eine identische Linearführung (56a; 56b) und/oder eine identische Antriebswelle (44a; 44b) verwendet wird wie zu einer Positionierung der Induktionsheizeinheit (16a; 16b) relativ zu der Werkzeugaufnahme (14a; 14b).

22. Verfahren nach Anspruch 20 oder 21, **dadurch gekennzeichnet, dass** zu einer Optimierung des wärmeleitenden Kontakts der Kühleinheit (86b) mit einer zuvor von der Induktionsheizeinheit (16b) erwärmten Werkzeugaufnahme (14b) eine Auswahl einer möglichst passenden Kontaktfläche zumindest eines Kühlelements (26b, 28b) der Kühleinheit (86b) aus einer Mehrzahl an unterschiedlich geformten Kontaktflächen des Kühlelements (26b, 28b) mittels einer Rotation des Kühlelements (26b, 28b) getroffen wird.
